# EUROPÄISCHE PATENTSCHRIFT

(11) **EP 4 444 637 B1**
(45) Veröffentlichungstag und Bekanntmachung des Hinweises auf die Patenterteilung: **18.02.2026**
(21) Anmeldenummer: 22814399.6
(22) Anmeldetag: 09.11.2022
(51) Int. Cl.: B65G 1/04, B65G 1/137

(54) **KOMMISSIONIER-SHUTTLE UND VERFAHREN ZUM KOMMISSIONIEREN INNERHALB EINER SHUTTLE-REGALGASSE**
PICKING SHUTTLE AND METHOD FOR PICKING WITHIN A SHUTTLE RACK AISLE
NAVETTE DE PRÉLÈVEMENT ET PROCÉDÉ DE PRÉLÈVEMENT À L'INTÉRIEUR D'UNE ALLÉE DE RAYONNAGES POUR NAVETTES

(30) Priorität: 09.12.2021 DE 102021132413
(43) Veröffentlichungstag der Anmeldung: 16.10.2024
(73) Patentinhaber: SSI Schäfer Automation GmbH (AT), 8051 Graz (AT)
(72) Erfinder: JEUSCHNIGGER, Johann, 8046 Graz (AT)
(74) Vertreter: Witte, Weller & Partner Patentanwälte mbB
(86) Internationale Anmeldenummer: PCT/EP2022/081343
(87) Internationale Veröffentlichungsnummer: WO 2023/104420

(56) Entgegenhaltungen:
- US-A1- 2015 336 741
- US-A1- 2018 057 263
- US-A1- 2019 337 733
- US-A1- 2020 156 871

## Beschreibung

Die vorliegende Offenbarung betrifft ein Verfahren zum Kommissionieren eines Produkts gemäß einem Kommissionierauftrag durch miteinander kooperierende Shuttle in einer Regalgasse eines Shuttle-Regallagersystems sowie ein dazu geeignetes Shuttle-Regallagersystem.

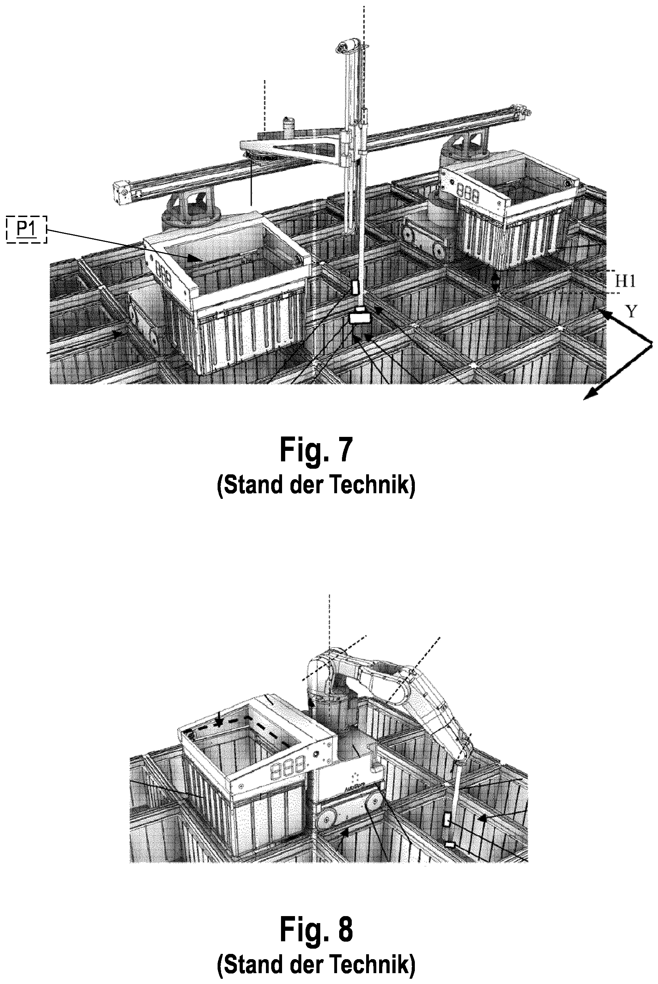

Das Patentdokument WO 2020/ 094 336 A1 betrifft ein automatisiertes Lagersystem, wo Lager- bzw. Quellbehälter zur Lagerung in einem gitterartigen Regalgestell in vertikalen Schächten vertikal übereinander gestapelt werden (Autostore^{™}-Konzept). Generell sind auf der horizontal orientierten Oberseite (Deckel) des Lagers schienengeführte, fahrerlose Fahrzeuge vorgesehen, die als Regalbediengeräte zum vertikalen Ein- und Auslagern der Behälter(stapel) benutzt werden. Im Speziellen können mehrere Fahrzeuge im Team operieren, um gelagerte Produkte kooperierend aus einem eingelagerten Quellbehälter zu entnehmen und in einen mitgeführten Sammel- bzw. Zielbehälter umzusetzen. Ein Team umfasst mindestens zwei Fahrzeuge, die über ein Gestänge (horizontal) miteinander verbunden sind. Am Gestänge ist eine Greifeinheit horizontal beweglich angebracht, um entnommene Produkte in den Zielbehälter zu bewegen, der von einem der kooperierenden Fahrzeug getragen wird. Die Greifeinheit umfasst einen vertikal beweglichen Manipulator, um gelagerte Produkte aus eingelagerten Quellbehältern zu entnehmen und in einen Zielbehälter umzusetzen (Kommissionierung), siehe Fig. 7. Die Fahrzeuge sind zur Produktentnahme starr und dauerhaft über das Gestänge miteinander verbunden.

Als Alternative zum Team beschreibt das Patentdokument WO 2020/ 094 337 A1 im gleichen Lagerkonzept (Autostore^{™}) ein einzelnes Fahrzeug, das mit seiner Greifeinheit gelagerte Produkte allein aus eingelagerten Quellbehältern entnehmen und in den mitgeführten Zielbehälter abgeben kann, siehe Fig. 8.

Als weitere Alternative im gleichen Lagerkonzept offenbart das Patentdokument WO 2020/ 249 331 A1 eine stationäre Kommissionierstation, die wie die Fahrzeuge oben auf dem Lagergitter angeordnet ist. Im Bereich der Kommissionierstation dienen die Fahrzeuge ausgelagerte Quellbehälter zur Produktentnahme an. Ein anderes Fahrzeug transportiert den Zielbehälter zur Kommissionierstation, die mit einer Greifeinheit versehen ist. Quell- und Zielbehälter werden mittels der Fahrzeuge innerhalb eines Aktionsradiuses der Greifeinheit so positioniert, dass entnommen und abgegeben (d.h. kommissioniert) werden kann. Der Boden oder eine der Seitenwände des Zielbehälters kann mit einer oder mehreren, schwenkbar angelenkten Klappen versehen sein, um gesammelte Produkte (aktiv mittels Antrieb) seitlich oder (passiv durch Schwerkraft) vertikal automatisiert abzugeben. Die Kommissionierung selbst erfolgt nach dem Produkt-zur-Maschine/Mensch-Prinzip (PzM-Prinzip), d.h. sowohl die Quellbehälter als auch die Zielbehälter werden zum Ort gebracht, wo sie sich zur Durchführung der Entnahme aus dem Quellbehälter und zur Abgabe an den Zielbehälter (Kommissionierung) treffen. Dieses Prinzip wurde in der Vergangenheit häufig auch als das Ware-zum-Mann-Prinzip (WzM-Prinzip) bezeichnet.

Das Patentdokument US 10 899 539 B2 betrifft ebenfalls das Autostore^{™}-Konzept und beschreibt eine auf dem Lagerblock angeordnete Kommissionierstation, die ebenfalls nach dem PzM-Prinzip arbeitet, wobei es einen ersten Fahrzeugtyp zum Transportieren der Quell- und Zielbehälter und einen zweiten Fahrzeugtyp zum Umsetzen der Produkte gibt. Das Umsetzen der Produkte erfolgt entweder während die Behälter vom ersten Fahrzeugtyp getragen werden oder während die Behälter in einem Lagerplatz-ähnlichen Gestell sitzen. Alternativ zum zweiten Fahrzeugtyp wird ein schienengeführt beweglicher Greifroboter eingesetzt, der räumlich zur Kommissionierstation gehört.

Das Patentdokument DE 10 2016 008 078 A1 beschreibt ein anderes Lagerkonzept, nämlich ein sogenanntes Shuttle-Regallagersystem. Shuttle-Regallagersystem zeichnen sich generell durch einen (Regal-)Lagerblock aus, der im Wesentlichen durch zwei Regalreihen mit einer Regalgasse dazwischen gebildet wird, wobei in der Regalgasse - vorzugsweise auf jeder Regalebene ein (Einebenen-)Regalbediengeräte - ein sogenanntes Shuttle - schienengeführt verfahrbar ist.

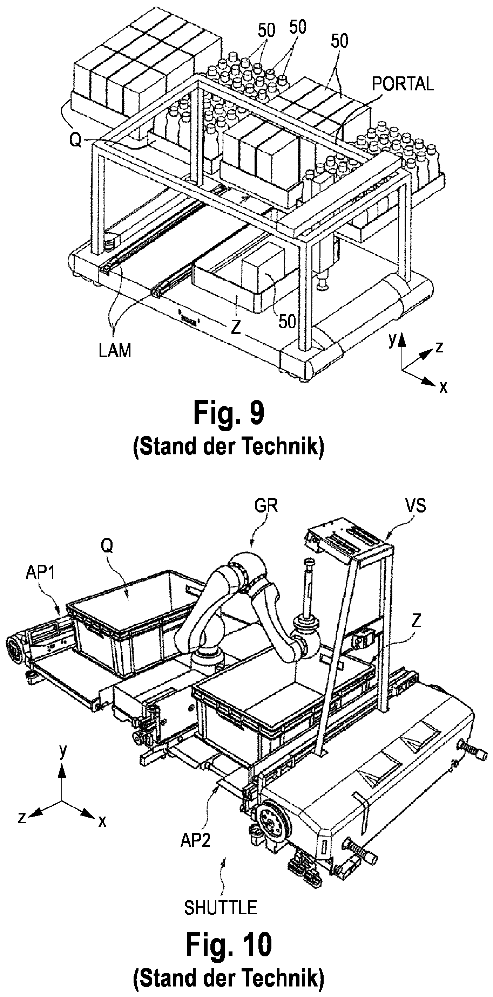

Auf dem speziellen Shuttle der DE' 078 A1 ist ein mehrachsiger Greifroboter fest montiert, um Produkte direkt aus dem Regal heraus zu greifen und in einen Auftrags- bzw. Zielbehälter Z abzugeben, den das Shuttle auf einem (ersten) Shuttle-Transportplatz mit sich trägt. Ergänzend kann das Shuttle einen (zweiten) Shuttle-Abstellplatz inklusive eines Lastaufnahmemittels (LAM) zur Aufnahme eines im Regal gelagerten Lager- bzw. Quellbehälters Q aufweisen, so dass der Greifroboter Produkte aus dem Lagerbehälter, der dann auf dem Shuttle steht, entnehmen kann und in den Zielbehälter abgeben kann, der ebenfalls auf dem Shuttle steht. Der Shuttle-montierte Greifroboter ist ein mehrachsiger Industrieroboter, der schwer ist und viel Raum benötigt, um Kollisionen zu vermeiden. Sein Gewicht erfordert eine Verstärkung des Regalgestells, insbesondere der Führungsschienen, und seine Größe behindert die Einsatzmöglichkeiten des Shuttles, insbesondere innerhalb der Regalgasse. Wegen des komplexen Roboters bedienen häufig nur wenige oder sogar nur ein einziges derartiges Shuttle mehrere Regalebenen parallel, was zusätzlich einen Shuttle-Lift zum vertikalen Umsetzen des Shuttles zwischen den Ebenen erfordert und was das Gesamtsystem weiter verteuert. Alternativ zum mehrachsigen Greifroboter wird in der DE' 078 A1 ein Shuttle-montierter Portalroboter vorgeschlagen, vgl. Fig. 9. Aus dem Gesichtspunkt einer Leistungsfähigkeit wäre es wünschenswert, auf jeder Regalebene ein Shuttle zu haben und auf den Shuttle-Lift verzichten zu können.

Das Patentdokument EP 3 564 165 A1 betrifft ebenfalls ein Shuttle-Regallagersystem und offenbart einen zur DE' 078 A1 ähnlichen Shuttle-Typ, siehe Fig. 10 mit: einem Shuttlemontierten mehrachsigen Greifroboter GR; einem Shuttle-monierten Visionsystem VS (z.B. CCD-Kamera); und zwei Aufnahmeplätzen AP1 und AP2, nämlich den Aufnahmeplatz AP1 zur vorübergehenden Aufnahme eines im Regal gelagerten Quellbehälters Q und einen weiteren Aufnahmeplatz AP2 zur dauerhaften Aufnahme eines permanent mitgeführten Zielbehälters Z, der nach seiner Befüllung gegen einen neuen Zielbehälter Z ausgetauscht wird. Diese Greifroboter-Aufnahmeplatz-Anordnung der EP' 165 A1 kann auch ein Lastaufnahmemittel eines klassischen Mehrebenen-Regalbediengeräts ersetzen. Aber auch hier liegen die oben bereits skizzierten Probleme vor. Insbesondere muss der Quellbehälter Q für jede Produktentnahme aus dem Regal ausgelagert und danach wieder eingelagert werden. Da die Kommissionierung vollständig im Bereich der Regalgasse erfolgt, ist eine Kommissionierleistung (Picks/Stunde) gering. Wie bei der DE' 078 A1 wird auch bei der EP' 165 A1 nach dem sogenannten Maschine-zum-Produkt-Prinzip (MzP-Prinzip) kommissioniert, was grundsätzlich in einer geringeren Kommissionierleistung als beim PzM-Prinzip resultiert.

Das Patentdokument EP 3 459 880 A1 beschreibt ein klassisches AKL-Lagersystem (AKL = automatisiertes Kleinteilelager, siehe Wikipedia), wo herkömmliche Shuttle (ohne Greifroboter), die in der Regalgasse betrieben werden, Quellbehälter aus dem Regal auslagern und an ein regalstirnseitiges Gassenende transportieren, wo ein über die gesamte Regalhöhe vertikal verfahrbarer Greifroboter angeordnet ist, um auftragsspezifisch Produkte aus den angedienten Quellbehältern zu entnehmen und um die entnommenen Produkte in einen am Regalfuß positionierten Zielbehälter abzugeben, der über eine Vorzonenfördertechnik angedient wird. Alternativ kann der Greifroboter den Zielbehälter auch (vertikal) mit sich führen. Hier wird wieder nach dem PzM-Prinzip gearbeitet, wobei die Kommissionierstation direkt angrenzend an die Stirnseite des Regalblocks positioniert ist, so dass die Kommissionierung am stirnseitigen Regal- bzw. Gassenende automatisiert erfolgt.

Das Patentdokument DE 10 2004 007 412 A1 betrifft, gemäß seiner Zusammenfassung, ein Verfahren und einem System zum Bedienen eines Regals, vorzugsweise in einer Kommissionieranlage, mit einem Regal und zugeordnetem Regalbediengerät zur Aus- und Einlagerung von Behältern, Tabletts oder dergleichen aus dem bzw. in das Regal, wobei ein eine einzige Regalebene oder mehrere übereinander angeordnete Regalebenen aufweisender Höhenbereich des Regals als selbständige Regalenheit über zumin- dest ein mechanisch angekoppeltes längsverstellbares Regalbediengerät bedient werden kann. Dort wird vorgeschlagen, das Regalbediengerät von einer Regaleinheit in eine andere Regaleinheit des gleichen Regals oder eines anderen Regals umzusetzen, vorzugsweise in eine andere Regaleinheit, welche noch kein gleichgeartetes Regalbediengerät besitzt.

Das Patentdokument US 2020/156871 A1 betrifft gemäß seiner Zusammenfassung eine Vorrichtung mit einem Robotersystem, das einen Kommissionierroboterarbeitsplatz, ein Behälterlager sowie Auslagerungs- und Transitdecks aufweist. Das System verfügt über Bots, die autonom Behälter vom Lager- und Bereitstellungssystem über die Transitdecks zum Kommissionierarbeitsplatz über die Transitdecks transportieren. Der Kommissionierroboterarbeitsplatz kann eine Kommissionierspur haben, auf der ein Roboter die Behälter auf den Bots zu den Auftragsbehältern in der Arbeitsstation transportiert. Der Roboterkommissionierarbeitsplatz weist ferner einen Warteschlangenpuffer auf, in dem die Bots für die Kommissionierspur espeichert werden.

Dieses Dokument offenbart ein Shuttle-Regallagersystem, das aufweist: einen Regallagerblock mit einer Regalgasse, die zwischen zwei Regalreihen angeordnet ist; und eine Vielzahl von miteinander kooperierenden Shuttle mit zumindest einem ersten Shuttle und einem zweiten Shuttle, die in der Regalgasse betrieben werden; wobei das erstes Shuttle auf Höhe einer ersten der Regalebenen betrieben wird; und wobei zumindest das zweite Shuttle, mit einer Greifeinheit versehen ist, die eingerichtet ist, ein Produkt aus einem Quellbehälter, der vorübergehend auf dem ersten Shuttle positioniert ist, zu entnehmen und an einen Sammelbehälter, abzugeben, indem die Greifeinheit das Produkt vertikal anhebt, und ggf. auch vertikal absenkt, und das entnommene Produkt horizontal quer zu einer Längsrichtung der Regalgasse versetzt.

Das Patentdokument US 2015/336741 A1 betrifft gemäß seiner Zusammenfassung ein Regallagersystem bestehend aus Lagerregalen für Ladegut und eine Ladegutmanipulationseinheit, die zumindest eine erste Ladegut-Hebevorrichtung mit einer Transportvorrichtung und eine erste Puffervorrichtung mit Transportfördervorrichtungen und eine Regalgasse sowie in den Regalebenen in Längsrichtung der Regalgasse verlaufende Führungsbahnen und einstöckige Regalbediengeräte zum Transport von Ladegut sowie eine an die Ladegut-Hebevorrichtung angeschlossene Fördertechnik zum Transport von Ladegut zu und von der Ladegut-Hebevorrichtung aufweist. Die Abtransport-Fördereinrichtungen bilden jeweils eine Auslagerstrecke für die Ladegüter und die Abtransport-Fördereinrichtungen bilden jeweils eine Einlagerstrecke für die Ladegüter. Mindestens eine der Fördereinrichtungen des Fördersystems weist in einem an die Ladegut-Hebeeinrichtung angrenzenden Förderabschnitt außerdem eine Transport-Fördereinrichtung zum Zwischenlagern eines oder mehrerer Ladegüter auf, die über Führungsbahnen vom Förderfahrzeug anfahrbar ist, um Ladegüter abzuholen oder einzulagern

Es ist daher eine Aufgabe der vorliegenden Offenbarung, ein verbessertes Kommissionierverfahren und ein verbessertes Shuttle-Regallagersystem vorzusehen.

Diese Aufgabe wird gelöst durch ein Verfahren zum Kommissionieren eines Produkts gemäß einem Kommissionierauftrag, der vorzugsweise zu einer Gruppe von zuvor gesammelten Kommissionieraufträgen gehört, durch miteinander kooperierende Shuttle in einem Shuttle-Regallagersystem, das einen Regallagerblock und eine Vielzahl von Shuttle umfasst, die zwangsgeführt in einer zwischen zwei Regalreihen definierten Regalgasse auf unterschiedlichen Regalebenen verfahrbar sind, wobei das Verfahren die folgenden Schritte aufweist: Verfahren eines ersten Shuttle der kooperierenden Shuttle in einer Längsrichtung des Regallagerblocks entlang der Regalgasse zu einem Regallagerplatz in einer ersten Regalebene und anschließendes (horizontales) Auslagern eines Quellbehälters, der das durch den Kommissionierauftrag festgelegte Produkt enthält, aus dem Regallagerplatz auf das erste Shuttle; Verfahren eines zweiten Shuttle der kooperierenden Shuttle in und entlang der Regalgasse auf Höhe einer höher gelegenen zweiten Regalebene (überlappend) über das zuvor tiefer positionierte erste Shuttle, so dass eine Greifeinheit, die (fest) am zweiten Shuttle montiert ist, das Produkt aus dem Quellbehälter entnehmen kann, der währenddessen auf dem ersten Shuttle positioniert ist; und Umsetzen des Produkts aus dem ausgelagerten Quellbehälter, der auf dem ersten Shuttle positioniert ist, in einen Sammelbehälter durch: Entnehmen des Produkts aus dem auf dem ersten Shuttle positionierten, ausgelagerten Quellbehälter mit der Greifeinheit des zweiten Shuttle; und Abgeben des entnommenen Produkts an den Sammelbehälter, der auf einem der Shuttle positioniert ist, das tiefer als das zweite Shuttle innerhalb der Regalgasse (in der vertikalen Richtung überlappend) positioniert ist, oder der tiefer liegend positioniert ist als das zweite Shuttle an einem Ende der Regalgasse.

Die innerhalb der Regalgasse miteinander kooperierenden Shuttle resultieren in einer Steigerung der Kommissioniereffizienz, insbesondere in einem Mischbetrieb. Im Mischbetrieb wird durch die Shuttle innerhalb der Regalgasse kommissioniert und gleichzeitig (nach dem PzM-Prinzip) an einer Kommissionierstation kommissioniert, die außerhalb des Regallagerblocks angeordnet ist.

Eine Verkehrsdichte außerhalb des Shuttle-Regallagersystems, insbesondere außerhalb des Regallagerblocks, wird verringert, ohne eine Kommissionierleistung der kooperierenden Shuttle sowie der (externen) Kommissionierstation zu schmälern. Die kooperierenden Shuttle können innerhalb der Regalgasse während Stillstands- oder Wartephasen für eine sog. Shuttle-Kommissionierung eingesetzt werden. Bei einer normalen PzM-Kommissionierung werden niemals alle Shuttle gleichzeitig über alle Regalebenen zum Ein- und Auslagern der Quellbehälter benötigt, so dass es für einzelne Shuttle immer wieder Stillstands- oder Wartephasen gibt, die herkömmlicherweise z.B. zum Umverteilen des Produktsortiments innerhalb des Regallagerblocks genutzt wurden. Diese Stillstandsphasen werden nun durch die Shuttle genutzt, um eine Anzahl von Umsetzvorgängen, die üblicherweise am Ort der externen Kommissionierstation durchgeführt werden, zu verringern. Dies bedeutet insbesondere, dass ein Quellbehälter nicht unter allen Umständen zur Kommissionierstation transportiert werden muss, da ein zugehöriger Umsetzvorgang bereits innerhalb der Regalgasse erledigt wird. Eine daraus resultierende Reduktion der Quellbehälterverkehrsdichte (Anzahl von Quellbehältern pro Einheitsförderstrecke) außerhalb des Regallagerblocks eröffnet eine Vielzahl von Optimierungsmöglichkeiten im Kommissionierablauf. Andere Quellbehälter können z.B. früher ein- und ausgelagert werden.

Bei einer zweistufigen Kommissionierung (Batch-Kommissionierung) können ferner Produkte mit einer geringen Zugriffshäufigkeit innerhalb der Regalgasse vorkommissioniert werden, um anschließend gesammelt in Form eines einzigen Transportauftrags zur Kommissionierstation transportiert zu werden, wo die gesammelten Produkte auftragsorientiert auf Zielbehälter verteilt werden.

Vorzugsweise ist die Greifeinheit zweiachsig ausgebildet, um das Produkt ausschließlich durch Bewegungen in einer (vertikalen) Höhenrichtung und einer (horizontalen) Querrichtung des Regallagerblocks zu entnehmen und abzugeben, und wobei insbesondere ein Bewegungsanteil des Umsetzschritts entlang der Längsrichtung durch ein Verfahren von mindestens einem der ersten und zweiten Shuttle durch eine Steuerung veranlasst wird.

Wenn die Greifeinheit zweiachsig (linear) ausgebildet ist, weist die Greifeinheit sehr geringe Abmessungen auf. Da die Umsetzvorgänge vorzugsweise immer nur nach unten wirken, reicht eine derartige zweiachsige Greifeinheit aus. Die Gesamtbauhöhe des Shuttles vergrößert sich durch die Greifeinheit nicht. Dadurch muss die Teilung der Regalebenen nicht an die kooperierenden Shuttle angepasst werden. Eine ursprünglich geplante Lagerdichte bleibt unverändert erhalten, weil das Shuttle nicht höher baut.

Bewegungsanteile eines Umsetzvorgangs werden nicht durch die Greifeinheit selbst, sondern durch das Shuttle bewirkt, so dass auf eine dritte Bewegungsachse verzichtet werden kann.

Die Greifeinheit selbst ist aufgrund ihrer geringen Anzahl von Bewegungsachsen leicht zu implementieren.

Insbesondere weist das Verfahren den Schritt auf: Analysieren von zumindest dem Kommissionierauftrag nach Shuttle-Kommissioniergeeigneten Produkten.

Nicht jedes Produkt, das in einem Kommissionierauftrag erscheint, ist zur Kommissionierung durch die kooperierenden Shuttle innerhalb der Regalgasse geeignet. In Abhängigkeit von dem standardgemäß genutzten Kommissionierkonzept gibt es Produkte, die besser oder schlechter zur gasseninternen Kommissionierung durch die kooperierenden Shuttle geeignet sind. Vorzugsweise werden nur solche Produkte innerhalb der Gasse durch die kooperierenden Shuttle vorkommissioniert bzw. final kommissioniert, die den "normalen" Kommissionierbetrieb bei der (externen) Kommissionierstation nicht oder nur so gering wie möglich stören.

Bevorzugt basiert der Schritt des oben genannten Analysierens auf mindestens einem der nachfolgenden Parameter: eine jeweilige Zugriffshäufigkeit der in den Kommissionieraufträgen enthaltenen Produkte; sich überschneidende Stillstands- bzw. Wartephasen der ersten und zweiten Shuttle; und eine Anzahl der Stufen des praktizierten Kommissionierprinzips (einstufige, insbesondere parallele, Kommissionierung; oder zweistufige Kommissionierung).

Da Produkte mit einer geringeren Zugriffshäufigkeit weniger häufig zur Kommissionierstation transportiert werden müssen, empfiehlt sich zur Verringerung der (Quellbehälter-)Verkehrsdichte die Kommissionierung der entsprechenden Produkte innerhalb der Regalgasse durch die kooperierenden Shuttle. Dabei können insbesondere sich zeitlich überlappende Standphasen der ersten und zweiten Shuttle von Bedeutung sein. Wenn die ersten und zweiten Shuttle während einer gewissen übereinstimmenden Zeitdauer sowieso nichts zu tun haben, d.h. keine Transportaufträge von einem Materialflussrechner zur Versorgung der (externen) Kommissionierstation zugewiesen bekommen haben, können diese Shuttle zur Shuttle-Kommissionierung eingesetzt werden.

Ferner ist die Shuttle-Kommissionierung insbesondere in der ersten, artikelorientierten Stufe eines zweistufigen Kommissionierprinzips von Vorteil. Die erste Kommissionierstufe kann in diesem Fall innerhalb der Regalgasse durchgeführt werden, so dass an der Kommissionierstation lediglich die zweite Kommissionierstufe, d.h. die auftragsorientierte Verteilung der zuvor eingesammelten Produkte, durchgeführt werden kann.

Weiter ist es von Vorteil, wenn das Shuttle-Regallagersystem eine Kommissionierstation außerhalb des Regallagerblocks mit Quellbehältern für eine Kommissionierung nach dem PZM-Prinzip versorgt und wenn die Shuttle-Kommissioniergeeigneten Produkte, die insbesondere Produkte mit einer niedrigen Zugriffshäufigkeit sind, gleichzeitig innerhalb der Regalgasse durch die kooperierenden Shuttle vorkommissioniert oder final kommissioniert werden.

Die Planung des Materialflusses erfolgt in diesem Zusammenhang vorzugsweise derart, dass die Kommissionierung der Shuttle-Kommissioniergeeigneten Produkte so durchgeführt, dass die Versorgung der Kommissionierstation mit aus dem Regalblock ausgelagerten Quellbehältern störungsfrei erfolgt. Störungsfrei bedeutet in diesem Zusammenhang, dass Transportaufträge für Quellbehälter, die (normal) zur Kommissionierstation zu transportieren sind, nicht mit Transportaufträgen kollidieren, die durch die kooperierenden Shuttle auszuführen sind. Dies bedeutet mit anderen Worten, dass die Transport- und Versorgungsaufträge der Kommissionierstation gegenüber solchen vorrangig behandelt werden, die für eine Shuttle-Kommissionierung innerhalb der Regalgasse benötigt werden.

Vorzugsweise ist der Schritt des Abgebens ein vertikales Fallenlassen des entnommenen Produkts.

Um das entnommene Produkt an den Sammelbehälter abzugeben, wird die Greifeinheit nicht aktiv betrieben. Das entnommene Produkt wird mittels Schwerkraft in den darunter positionierten Sammelbehälter transferiert. Diese Form des Abgebens ist energiesparend.

Diese Form des Abgebens setzt aber voraus, dass das entnommene Produkt beim Aufprall im Sammelbehälter nicht beschädigt wird. In diesem Zusammenhang spielt also eine Fallhöhe eine Rolle, die proportional in die Energie eingeht. Da die Abgabe des entnommenen Produkts üblicherweise aber im Bereich von zwei direkt zueinander benachbarten Regalebenen erfolgt, auch wenn ein sogenannter Fallturm eingesetzt wird, ist diese Art der Abgabe für einen überwiegenden Anteil eines Artikelspektrums, insbesondere im Bereich des E-Commerce, anwendbar.

Insbesondere werden das oder die an den Sammelbehälter abzugebenden Produkte, insbesondere im Fall einer zweistufigen Kommissionierung, zu einer Kommissionierstation außerhalb des Regallagerblocks transportiert.

Die erste Stufe, d.h. das produkttyporientierte Einsammeln von Produkten, erfolgt direkt im Regal, so dass sich die Transportwege der zugehörigen Quellbehälter extrem reduzieren. Somit müssen nicht alle Quellbehälter zur Kommissionierstation transportiert werden, so dass sich die (Quellbehälter-)Verkehrsdichte außerhalb des Regallagerblocks verringert und somit die Möglichkeit zu weiteren Optimierungen eröffnet.

Weiter ist es bevorzugt, wenn der Sammelbehälter, der auf dem einen der Shuttle positioniert ist, (innerhalb des Regallagerblocks) entweder geleert oder ausgetauscht wird, nachdem alle durch den oder die Kommissionieraufträge vorgegebenen Produkte an den Sammelbehälter abgegeben wurden.

Die kooperierenden Shuttle müssen zur Übergabe der eingesammelten Produkte die Regalgasse nicht verlassen. Die eingesammelten Produkte werden entweder mit einem austauschbaren Sammelbehälter oder in einem anderen Transportbehälter oder direkt auf einem Förderer zur Kommissionierstation oder insbesondere direkt in einen Warenausgangsbereich verbracht oder innerhalb des Regallagerblocks in einen entsprechenden Transportbehälter (zur Weiterleitung an die Kommissionierstation) oder Auftragsbehälter (zum Versand aus dem Warenausgangsbereich heraus) umgesetzt.

Des Weiteren wird die Aufgabe gelöst durch ein Shuttle-Regallagersystem, das aufweist: einen Regallagerblock mit einer Regalgasse, die zwischen zwei Regalreihen angeordnet ist; und eine Vielzahl von miteinander kooperierenden Shuttle mit zumindest einem ersten Shuttle und einem zweiten Shuttle, die auf unterschiedlichen Regalebenen vorgesehen sind und die (nur) in der Regalgasse betrieben werden; wobei das erste Shuttle auf Höhe einer ersten der Regalebenen betrieben wird; wobei das zweite Shuttle auf Höhe einer zweiten der Regalebenen betrieben wird, die höher und insbesondere unmittelbar über der ersten Regalebene angeordnet ist; und wobei zumindest das zweite Shuttle, und vorzugsweise alle Shuttle, mit einer zweiachsigen Greifeinheit versehen ist, die eingerichtet ist, ein Produkt aus einem Quellbehälter, der vorübergehend auf dem ersten Shuttle positioniert ist, zu entnehmen und an einen Sammelbehälter, der tiefer als das zweite Shuttle positioniert ist, abzugeben, indem die Greifeinheit das Produkt lediglich vertikal anhebt, und ggf. auch vertikal absenkt und das entnommene Produkt horizontal quer zu einer Längsrichtung der Regalgasse versetzt.

Durch die Integration der Greifeinheit in die entsprechenden Shuttle der kooperierenden Shuttle vergrößert sich deren Gesamtbauhöhe nicht. Damit bleibt die Teilung der Regalebenen unbeeinflusst. Die Lagerdichte ändert sich nicht, wie oben bereits erläutert.

Bestehende Shuttle-Regallageranlagen können nachgerüstet werden, indem einige oder alle der Bestands-Shuttle mit einer entsprechenden Greifeinheit nachgerüstet werden. Dies ermöglicht die Durchführung des oben beschriebenen Verfahrens in Bestandsanlagen, die ursprünglich nicht zur gasseninternen Shuttle-Kommissionierung eingerichtet waren.

Die Greifeinheit ist kompakt und durch die Zweiachsigkeit einfach aufgebaut. Die Bewegungsabläufe sind simpel und einfach zu koordinieren. Eine Kollision mit den Regalreihen ist ausgeschlossen, weil die Greifeinheit nicht in die Regalreihen hinein bewegt werden kann.

Durch die Aufnahme der technisch einfach ausgestalteten Greifeinheit bleibt das Gesamtgewicht des Shuttles im Vergleich zur Aufnahme eines fünf- oder sechsachsigen Roboters nahezu unverändert. Die Struktur der Regale muss nicht verstärkt werden, weil sich das Gewicht der Shuttle nicht wesentlich erhöht.

Vorzugsweise werden die Shuttle in der Regalgasse entlang von Schienen zwangsgeführt bewegt, die sich entlang der Längsrichtung erstrecken, die in der Längsrichtung orientiert sind und die mit den Regalreihen verbunden sind.

Insbesondere ist jedes der Shuttle ein Einebenen-Regalbediengerät.

Vorzugsweise weisen zumindest einige, und vorzugsweise alle, der Quellbehälter eine Fachunterteilung auf, so dass Produkte in vertikal ausgerichteten Produktstapeln typenrein an fest vorgegebenen Positionen innerhalb der entsprechenden Quellbehälter lagerbar sind.

Die Fachunterteilungen ermöglichen eine ortsgenaue Positionierung der Produkte innerhalb der Quellbehälter, so dass die kooperierenden Shuttle ohne ein Vision-System (z.B. eine Kamera) auskommen. Die Entnahme des Produkts aus einem Quellbehälter, der auf dem unteren der kooperierenden Shuttle steht, kann ohne Bilderkennung, d.h. basierend allein auf den Produktstammdaten, erfolgen. Die übergeordnete Steuerung hat Kenntnis vom jeweiligen Lagerort des Produkts sowie von einer aktuellen Höhe des Produktstapels, um die Greifeinheit entsprechend zur Entnahme des aktuell höchsten Produkts des entsprechenden Produktstapels anzusteuern.

Die Produkte werden vorzugsweise von allen Seiten durch die Fachunterteilungen gestützt, so dass die Produkte innerhalb eines Produktstapels immer gleich ausgerichtet sind. Eine chaotische Produktverteilung und -orientierung innerhalb des Quellbehälters ist damit ausgeschlossen, so dass auf eine Bilderzeugung und Bildverarbeitung zum Zwecke einer Lage- und Positionsbestimmung der Produkte innerhalb des Quellbehälters verzichtet werden kann.

Alternativ kann jede Greifeinheit mit einem Vision-System versehen sein. In diesem Fall dürften die Produkte innerhalb der Quellbehälter chaotisch verteilt vorliegen, da der Entnahmevorgang in Echtzeit basierend auf einer Bildverarbeitung durchgeführt werden kann, die eine jeweilige Position und Ausrichtung der Produkte innerhalb des Quellbehälters bestimmt.

Weiter ist es von Vorteil, wenn jede der Greifeinheiten in einem in der Längsrichtung gelegenen Endabschnitt des entsprechenden Shuttles derart positioniert und angebracht ist, dass eine Shuttlehöhe ohne einen aufgeladenen Quellbehälter geringer als mit einem geladenen Quellbehälter ist.

Die Greifeinheit erhöht die Gesamtbauhöhe des Shuttles also nicht.

Weiter wird ein Shuttle-Regallagersystem vorgeschlagen, das zum Durchführen des oben erläuterten Verfahrens eingerichtet ist. Das entsprechende Shuttle-Regallagersystem verfügt also über eine Steuerung, die zur Durchführung des oben erläuterten Verfahrens eingerichtet ist.

Ferner wird ein Lager- und Kommissioniersystem vorgeschlagen, das eine derartige Steuerung und das oben beschriebene Shuttle-Regallagersystem aufweist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Ausführungsbeispiele der Offenbarung sind in den Zeichnungen dargestellt und werden in der nachfolgenden Beschreibung näher erläutert. Es zeigen:
- Fig. 1: ein Blockdiagramm eines Lager- und Kommissioniersystems;
- Fig. 2: ein Blockdiagramm eines Shuttle-Regallagersystems;
- Fig. 3: eine Seitenansicht (Fig. 3A) und eine Draufsicht (Fig. 3B) von miteinander kooperierenden Shuttle;
- Fig. 4: eine Seitenansicht (Fig. 4A) und eine Draufsicht (Fig. 4B) von kooperierenden Shuttle, die selbsttätig ihren Sammelbehälter entleeren;
- Fig. 5: ein Flussdiagramm zum Durchführen einer Shuttle-Kommissionierung;
- Fig. 6: ein Flussdiagramm eines Kommissionierverfahrens, das nach dem Produkt-zum-Mensch/Maschine-Prinzip arbeitet;
- Fig. 7: eine perspektivische Ansicht von miteinander kooperierenden Shuttle, in einem herkömmlichen Autostore^{™}-Lagerkonzept;
- Fig. 8: eine perspektivische Ansicht eines allein agierenden Shuttle im herkömmlichen Autostore^{™}-Lagerkonzept; und
- Fig. 9: eine perspektivische Ansicht eines herkömmlichen Shuttles mit einer dreiachsigen Portal-Greifeinheit; und
- Fig. 10: eine perspektivische Ansicht eines vorbekannten Kommissionier-Shuttle mit einem sechsachsigen Manipulator, zwei Aufnahmeplätzen und einem Vision-System.

Das hier vorgeschlagene automatisierte System kommt insbesondere in interlogistischen Lager- und Kommissioniersystemen zum Einsatz und dient vorzugsweise als Lager zur Kommissionierung von Produkten aus den Bereichen E-Commerce, E-Grocery, Micro-Fulfillment-Zentren oder Ähnlichem.

Im Allgemeinen umfasst die Intralogistik logistische Material- und Warenflüsse, die sich innerhalb eines Betriebsgeländes, insbesondere innerhalb eines Betriebsgebäudes, ereignen. Der Begriff der Intralogistik wurde definiert, um eine Abgrenzung zum Warentransport außerhalb des Betriebsgeländes zu schaffen, der zum Beispiel durch eine Spedition zwischen zwei Betriebsstätten erfolgt. Der Begriff der Intralogistik ist als die Organisation, Steuerung, Durchführung und Optimierung des innerbetrieblichen Warenflusses (zum Beispiel Produkte in Distribution und Versand) und des Materialflusses (zum Beispiel Vor-, Zwischen- und Endprodukte in der Produktion), der Informationsströme sowie des Waren- und Materialumschlags in der Industrie und im Handel definiert. Nachfolgend wird vereinfacht nur noch vom Materialfluss gesprochen, auch wenn tatsächlich Produkte transportiert werden.

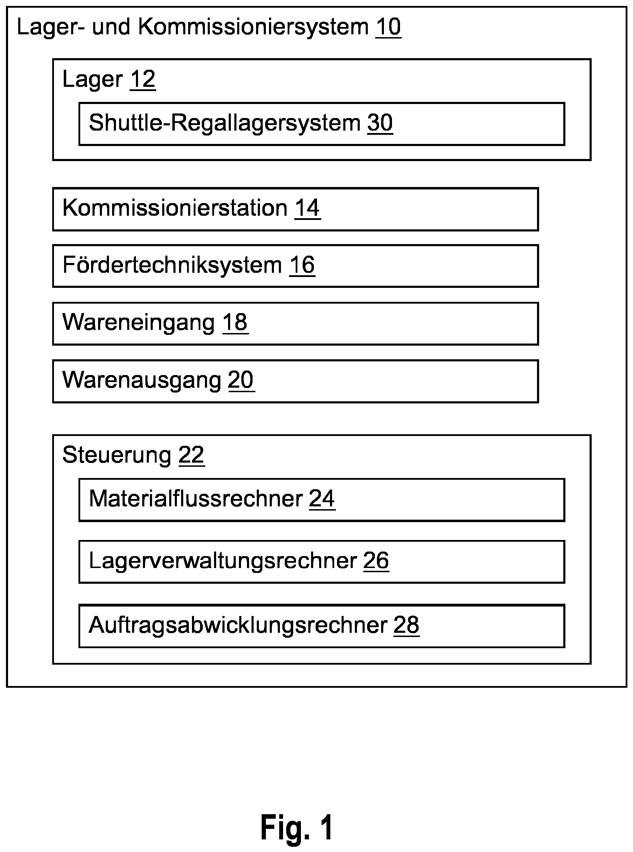

Fig. 1 zeigt ein Blockdiagramm eines Lager- und Kommissioniersystems 10. Das Lager- und Kommissioniersystem 10 weist ein Lager 12, mindestens eine Kommissionierstation 14 und ein Fördertechniksystem 16 auf. Das Fördertechniksystem 16 verbindet das Lager 12 mit der Kommissionierstation 14 hinsichtlich des Materialflusses. Das Fördertechniksystem 16 kann ferner einen Wareneingang 18 und/oder einen Warenausgang 20 des Systems 10 miteinander und mit dem Lager 12 und der Kommissionierstation 14 hinsichtlich des Materialflusses verbinden. Das Fördertechniksystem 16 kann Stetigförderer (z.B. Rollenförderer, Bandförderer, Kettenförderer, Hängeförderer, etc.) und/oder Unstetigförderer (zum Beispiel fahrerlose Transportfahrzeuge, Regalbediengeräte, Lifte, etc.) umfassen.

Des Weiteren weist das Lager- und Kommissioniersystem 10 eine Steuerung 22 auf, die einen Materialflussrechner 24, einen Lagerverwaltungsrechner 26 und/oder einen Auftragsabwicklungsrechner 28 umfassen kann. Der Materialfluss, die Lagerverwaltung (Lagerplatzverwaltung, Inventurdaten, etc.) und/oder die Auftragsabwicklung (z.B. Zuordnung und Verteilung von Aufgaben zur Erledigung eines Kommissionierauftrags) können alternativ auch dezentral in einem verteilten Datenverarbeitungssystem durchgeführt werden.

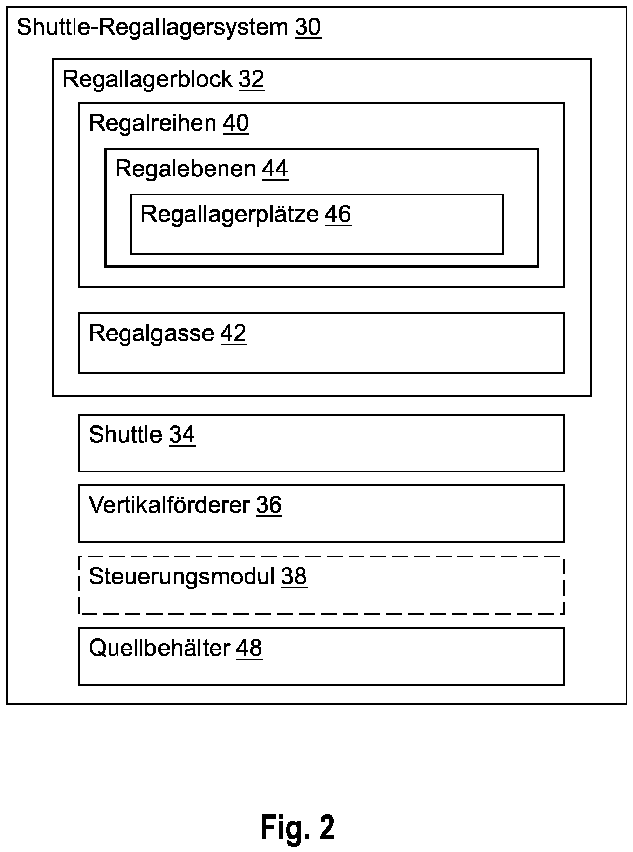

Das Lager 12 umfasst ein Shuttle-Regallagersystem 30. Das Shuttle-Regallagersystem 30 ist in dem Blockdiagramm der Fig. 2 schematisch veranschaulicht. Das Shuttle-Regallagersystem 30 umfasst mindestens einen Regallagerblock 32, mehrere Shuttle 34 und mindestens einen Vertikalförderer 36. In Abhängigkeit von der Architektur der Steuerung 22 (Fig. 1) umfasst das Shuttle-Regallagersystem 30 optional auch ein oder mehrere Steuerungsmodule 38, die vorzugsweise Teil der Steuerung 22 sind.

Der Regallagerblock 32 wird durch mindestens zwei Regalreihen 40 definiert, die (in einer Querrichtung Z) beabstandet zueinander angeordnet sind, um eine Regalgasse 42 zwischen sich zu bilden.

In jeder Regalreihe 44 sind eine Vielzahl von Regallagerplätzen 46 horizontal und vertikal nebeneinander angeordnet und entlang einer Längsrichtung X und einer Höhenrichtung Y des Systems 30 orientiert. Die Regalreihen 40 und die Regalgasse 42 erstrecken sich im Wesentlichen entlang der Längsrichtung X des Regallagerblocks 32 und sind entlang der Längsrichtung X orientiert. Jede der Regalreihen 40 ist vertikal in mehrere Regalebenen 44 (mit vorzugsweise gleicher Teilung) unterteilt.

Die Regalebenen 44 sind in einer Höhenrichtung Y des Systems 30 vertikal übereinander angeordnet. Jede der Regalebenen 44 weist horizontal nebeneinander angeordnete Regallagerplätzen 46 auf.

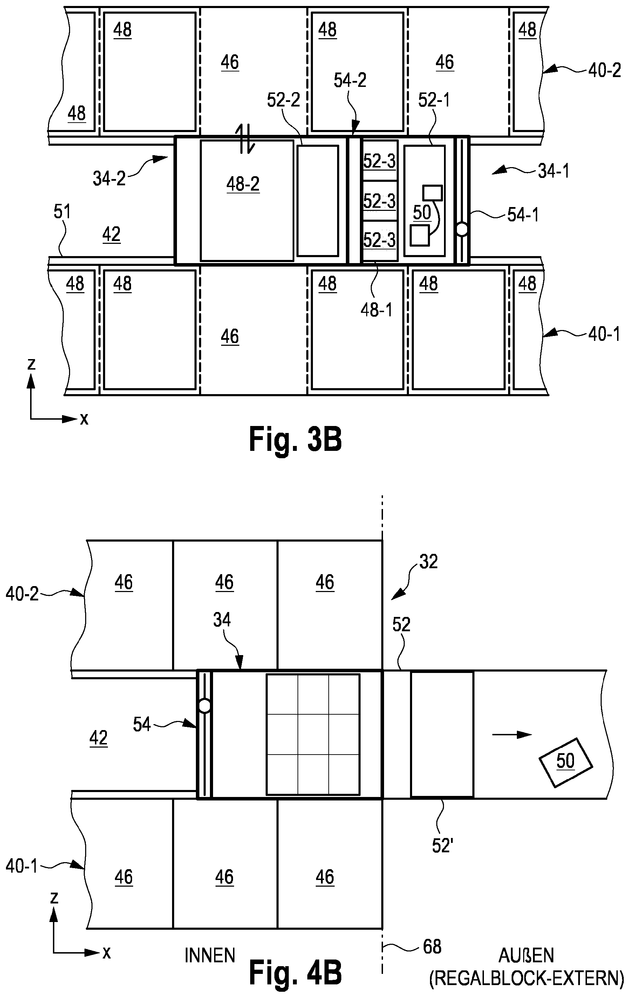

Die Regallagerplätze 46 werden von den Shuttle 34 zur Ein- und Auslagerung von Quell- bzw. Lagerbehältern 48, die zur Bevorratung von zu kommissionierenden Produkten 50 eingerichtet sind, (in der Querrichtung Z des Systems 30) bedient. Vorzugsweise handelt es sich bei den Shuttle 34 um Einebenen-Regalbediengeräte, so dass auf Höhe von jeder der Regalebenen 44 in der Regalgasse 42 mindestens ein Shuttle 34 vorgesehen ist, das die Regallagerplätze 46 in der entsprechenden Regalebene 44 bedient. Die Shuttle 34 sind eingerichtet, zwangsgeführt entlang von Schienen 51 (vgl. Fig. 3B und 4B), die vorzugsweise seitlich an den Regalreihen 40 angebracht sind, in der Längsrichtung X innerhalb der Gasse 42 verfahren zu werden. Die Shuttle 34 weisen jeweils ein Lastaufnahmemittel auf, das eingerichtet ist, die Quellbehälter 48 in der Querrichtung Z in die Regallagerplätze 46 ein- und auszulagern. Die Richtungen X, Y und Z definieren ein kartesisches Koordinatensystem.

Die Vertikalförderer 36 sind eingerichtet, die Quellbehälter 48 und/oder die Shuttle 34 in der vertikalen Höhenrichtung Y umzusetzen. Es können mehrere Vertikalförderer 36 pro Regallagerblock 32 vorgesehen werden. Die Vertikalförderer 36 können regalintegriert oder außerhalb der Regalreihen 40 in deren Verlängerung oder innerhalb der Regalgasse 42 angeordnet werden. Vorzugsweise werden die Vertikalförderer 36 stirnseitig angrenzend an die Regalreihen 40 in deren Verlängerung angeordnet.

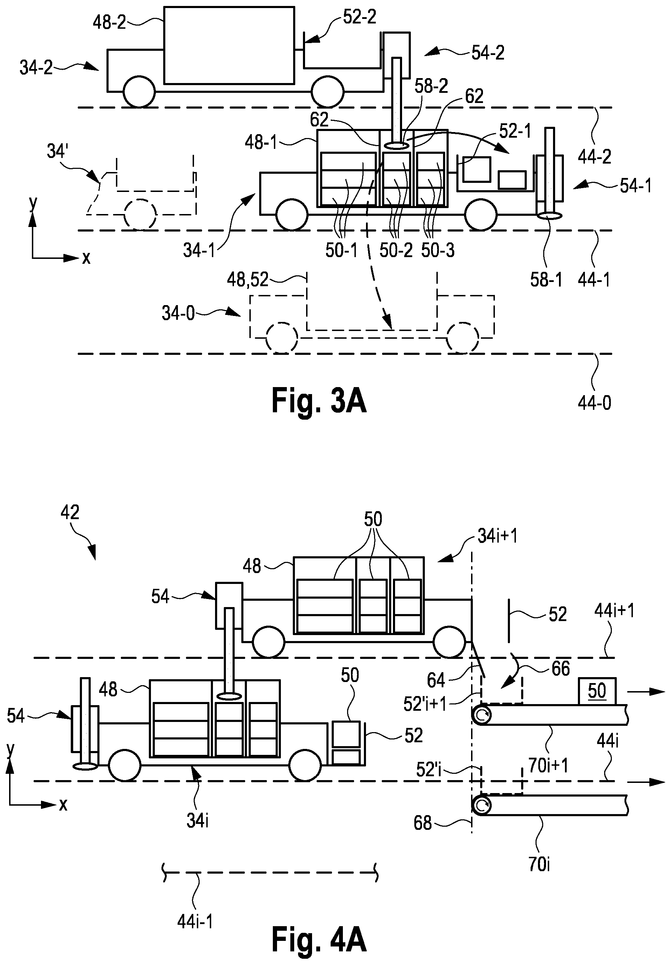

Fig. 3 veranschaulicht eine Interaktion zwischen kooperierenden Shuttle 34, insbesondere zwischen den zwei Shuttle 34-1 und 34-2. Fig. 3 veranschaulicht eine Shuttle-Kommissionierung (Entnahme und Abgabe) eines Produkts 50 innerhalb einer Regalgasse 42 eines Shuttle-Regallagersystems 30, bei dem z.B. auf jeder Regalebene 44 zumindest eines der Shuttle 34 angeordnet ist. Bei den Shuttle 34 handelt es sich vorzugsweise um Einebenen-Regalbediengeräte, die also keine Hubfunktion aufweisen und somit nur auf ihrer Regalebene 44 zum Ein- und Auslagern von Quellbehältern (z.B. Lagerbehälter) 48 benutzt werden. Der grundsätzliche Aufbau der Shuttle 34 ist bekannt. Die Shuttle 34 sind vorzugsweise zur Aufnahme eines (einzigen ) Lagerbehälters 48 eingerichtet und verfügen über eine entsprechende Lastaufnahmeeinrichtung.

Die Fig. 3A zeigt eine seitliche Detailansicht von exemplarisch drei Regalebenen 44-0 bis 44-2, die vertikal übereinander und direkt (d.h. ohne weitere Funktionselemente, wie z.B. eine Ein/Auslagerebene dazwischen) benachbart zueinander angeordnet sind. Die Regalebene 44-1 ist direkt unterhalb der darüber angeordneten Regalebene 44-2 angeordnet. Die Regalebene 44-1 ist über der Regalebene 44-0 angeordnet, die exemplarisch eine unterste Regalebene veranschaulicht. Es versteht sich, dass mehr Regalebenen 44 vorgesehen sein können. Zur Durchführung der Shuttle-Kommissionierung werden mindestens zwei Regalebenen 44 benötigt, die auch vertikal weiter zueinander beabstandet sein können als eine Standardregalteilung.

In der Fig. 3 wird ein erstes Shuttle 34-1 auf der Höhe der ersten Regalebene 44-1 betrieben, um dort die Quellbehälter 48 in der Querrichtung Z ein- und auszulagern. Ein zweites Shuttle 34-2 wird auf der Höhe der zweiten Regalebene 44-2 betrieben. In der untersten Regalebene 44-0 ist ebenfalls ein Shuttle 34-0 durch eine Strichlinie angedeutet. Es versteht sich, dass mehrere Shuttle 34 gleichzeitig eine (einzige) Regalebene 44 bedienen können, vgl. Regalebene 44-1 in Fig. 3, wo exemplarisch ein weiteres Shuttle 34' links neben dem Shuttle 34-1 durch eine Strichlinien angedeutet ist. Vorzugsweise wird aber immer nur ein Shuttle 34 pro Regalebene 44 verwendet.

Die Shuttle 34 sind generell in der Längsrichtung X zwangsgeführt verfahrbar, z.B. auf Schienen 51, vgl. Fig. 3B, die eine Draufsicht der Fig. 3A zeigt. Auf der Höhe jeder der Regalebenen 44 sind die Regallagerplätze 46 horizontal nebeneinander angeordnet, um die Quellbehälter 48 in der Querrichtung Z ein- und auszulagern. Jedes der Shuttle 34 ist generell eingerichtet, zumindest einen der Quellbehälter 48 aufzunehmen und an einen hier nicht dargestellten (Behälter-)Vertikalförderer 36 zu bringen. In der Fig. 3 trägt das Shuttle 34-1 den Quellbehälter 48-1 mit sich, der mit unterschiedlichen Produkten 50-1 bis 50-3 (fachunterteilt) bestückt ist.

Es versteht sich, dass die Quellbehälter 48 vorzugsweise produkttypenrein beladen sind. Auch der Quellbehälter 48-1 ist typenrein beladen, da in jedem Fach ausschließlich Produkte 50 eines Produkttyps vorgesehen sind. Der Quellbehälter 48-2, den das zweite Shuttle 34-2 mit sich führt, ist exemplarisch leer dargestellt.

Des Weiteren ist jedes der Shuttle 34 generell eingerichtet, einen Sammelbehälter 52 mit sich zu führen, d.h. aufzunehmen, und durch die Regalgasse 42 zu transportieren. In den Sammelbehältern 52 werden Produkte 50 gesammelt, die von einem anderen, vorzugsweise höher positionierten Shuttle 34 (gemäß einem Kommissionierauftrag) umgesetzt werden. Die Sammelbehälter 52 sind vorzugsweise etwas kleiner als die Quellbehälter 48 dimensioniert, wobei eine Längenabmessung in der Querrichtung Z vorzugsweise identisch zu jener der Quellbehälter 48 (und der Shuttle 34 selbst) ist. Die Sammelbehälter 52 weisen vorzugsweise eine Grundfläche auf, die auf einer Oberseite eines (gewöhnlichen) Shuttles 34 ungenutzt, d.h. frei zur Aufnahme des Sammelbehälters ist. Die Sammelbehälter 52 können fest auf den Shuttle 34 positioniert sein, d.h. sie sind in diesem Fall nicht austauschbar.

Die Sammelbehälter 52 können aber auch austauschbar auf den Shuttle 34 positioniert werden. Entsprechende Sammelbehälter-Austauschstationen (nicht dargestellt) können auf z.B. anstatt eines oder mehrerer Regallagerplätze 46 vorzugsweise auf jeder Regalebene 44 angeordnet sein.

Vorzugsweise führt jedes der Shuttle 34 einen einzigen Sammelbehälter 52 mit sich. In einer nicht veranschaulichten Abwandlung können die Shuttle 34 aber auch mehrere Sammelbehälter 52 gleichzeitig aufnehmen.

Ferner versteht es sich, dass der Sammelbehälter 52 auch durch einen Quellbehälter 48 realisiert sein kann, so dass die Shuttle ohne einen zusätzlich Sammelbehälter 52 auskommen. Dies bedeutet, dass das aufnehmende Shuttle 34 in diesem Fall keine zwei Behälter 48 und 52 mit sich führt, sondern lediglich einen einzigen Behälter 48, der dann als Sammelbehälter 52 dient. Bevorzugt ist aber die Ausgestaltung, bei der die Shuttle 34 jeweils mindestens einen Quellbehälter 48 und mindestens einen separat dazu vorgesehenen Sammelbehälter 52 tragen können.

Weitere Sammelbehälter 52' können alternativ oder ergänzend in der Regalgasse 42 positioniert werden, wie es bei Fig. 4 noch näher erläutert werden wird.

In der Fig. 3 ist der Sammelbehälter 52-1 des ersten Shuttles 34-1 z.B. bereits mit zwei Produkten 50 beladen, die z.B. das Shuttle 34-2 umgesetzt hat. Der Sammelbehälter 52-2 des zweiten Shuttles 34-2 ist (noch) leer und könnte von einem Shuttle 34 oberhalb der Regalebene 44-2 beladen werden.

Ferner weist vorzugsweise jedes der Shuttle 34 eine Greifeinheit 54 auf. Zumindest die Shuttle 34 oberhalb der untersten Regalebene 44-0 weisen jeweils mindestens eine Greifeinheit 54 auf. Jede der Greifeinheiten 54 umfasst einen hier nicht dargestellten Antrieb 56, um einen Greifer bzw. Manipulator 58 zumindest (linear) vertikal in der Höhenrichtung Y und (linear) horizontal in der Querrichtung Z zu bewegen.

Die Greifeinheiten 54 sind vorzugsweise zur zweiachsigen Betätigung eingerichtet. Die Greifeinheiten 54 können eingerichtet sein, nur nach unten zu wirken, d.h. eine Hubfunktion über ihre jeweilige eigene Regalebene 44 ist in diesem Fall nicht vorgesehen. Die Greifeinheiten 54 können z.B. entsprechende Spindeltriebe umfassen.

Die Greifeinheiten 54 sind vorzugsweise in einem Endbereich der Shuttle 34 entlang der Längsrichtung X angeordnet. Die Greifeinheiten 54 können nachträglich an konventionellen Shuttle 34 einer Bestandanlage montiert werden.

In der Fig. 3 ist exemplarisch eine Situation gezeigt, in welcher der Greifer 58-2 des zweiten Shuttles 34-2 in den Quellbehälter 48-1 greift, um eines der Produkte 50-2 zu greifen, das von einem Kommissionierauftrag benötigt wird, und in den Sammelbehälter 52-1 des ersten Shuttles 34-1 umzusetzen, der diesem Kommissionierauftrag (durch den Auftragsabwicklungsrechner 28 vorab) zugewiesen wurde. Die Koordination der dazu erforderlichen Bewegungen der Behälter 48 und 52 sowie der Shuttle 54 wurde vorab z.B. vom Materialflussrechner 24 bestimmt. Die Kommissionierung eines durch einen Kommissionierauftrag spezifizierten Produkts 50 erfolgt also innerhalb der Regalgasse 42, indem zumindest zwei der Shuttle 34 miteinander kooperieren.

Im Beispiel der Fig. 3 (und auch bevorzugt allgemein) werden die kooperierenden Shuttle 34-1 und 34-2 in der Längsrichtung X der Gasse 42 so relativ zueinander verfahren, dass die Greifeinheit 54-2 des höher angeordneten Shuttles 34-2 in den Quellbehälter 48 des darunter angeordneten Shuttles 34-1, insbesondere durch ein einfaches Absenken, bewegbar ist, vgl. Fig. 3B.

Sobald der entsprechende Greifer bzw. Manipulator 58 das gewünschte Produkt 50 im Quellbehälter 48 gegriffen hat und zumindest leicht angehoben hat, kann zumindest eines der beteiligten Shuttle 34, vorzugsweise beide Shuttle 34, in der Längsrichtung X so versetzt werden, dass die in der Längsrichtung X statische Greifeinheit 54 des oberen Shuttles 34-2 vertikal direkt über dem Sammelbehälter 52-1 des darunter positionierten Shuttles 34-1 positioniert ist und dass das entnommene (und immer noch gegriffene) Produkt 50 vertikal in den Sammelbehälter 52 des unteren Shuttles 34 abgegeben werden kann. Die Abgabe erfolgt entweder durch aktives Absenken des Greifers 58 oder alternativ durch ein Fallenlassen des gegriffenen Produkts 50.

Die Breite des Sammelbehälters 52 in der Querrichtung Z erstreckt vorzugsweise über die gesamte Breite des Shuttles 34 und ist insbesondere an die Breite der Greifeinheit 54 angepasst.

Es versteht sich, dass auch mehr als zwei Shuttle 34 beim Kommissionieren miteinander kooperieren können. So ist es zum Beispiel möglich, dass das höchste Shuttle 34, z.B. das Shuttle 34-2, einer Gruppe von Shuttle 34 den Greifvorgang durchführt, während ein tiefer angeordnetes Shuttle 34, z.B. das Shuttle 34-1, den entsprechenden Quellbehälter 48 andient und ein noch tiefer angeordnetes Shuttle 34, z.B. das Shuttle 34-0, den entsprechenden Sammelbehälter 52 bereitstellt, vgl. Fig. 3A, wo der Sammelbehälter 52 exemplarisch durch einen leeren Quellbehälter 48 implementiert ist.

Die beiden tiefer als das greifende Shuttle 34 angeordneten Shuttle 34 können dabei auch auf der gleichen Regalebene 44 angeordnet sein, siehe z.B. die Shuttle 34-1 und 34' in Fig. 3A. Diese Shuttle 34 werden nach dem Greifen des entsprechenden Produkts 50 in der Längsrichtung X umgesetzt, wie oben bereits beschrieben, um den Sammelbehälter unter der greifenden Shuttle 34 zu positionieren.

Es stellt einen strukturellen Vorteil dar, wenn bei allen Umsetzvorgängen lediglich Bewegungen in der vertikalen Richtung Y und der Querrichtung Z durch die Greifeinheit 54 durchzuführen sind. Die Greifeinheit ist dann nur zweiachsig und somit einfacher zu bedienen und leichter. Bewegungsanteile in der Längsrichtung X werden durch ein Fahren der entsprechenden Shuttle 34 erledigt. Der Umsetzvorgang erfolgt vorzugsweise ausschließlich unterhalb des greifenden Shuttles 34, dessen Greifeinheit 54 den Umsetzvorgang durchführt.

Um den konzeptionellen Vorteil der Kommissionierung innerhalb der Regalgasse 42 - gegenüber einer Kommissionierung an der Kommissionierstation 14 außerhalb des Regallagerblocks 32 - zu erzielen, könnte aber auch eine mehrachsige Greifeinheit 54 benutzt werden. Dieser konzeptionelle Vorteil wird unten noch näher erläutert werden.

Es versteht sich, dass allgemein jede der Greifeinheiten 54 mit einem (nicht dargestellten) Kamerasystem 60 versehen sein kann, um den Umsetzvorgang zu koordinieren und zu überwachen. Basierend auf den entsprechend erzeugten Bildern kann mittels Bildverarbeitung eine Position des zu entnehmenden Produkts 50 innerhalb des Quellbehälters 48 in Echtzeit ermittelt werden. Des Weiteren kann der Umsetzvorgang als solcher überwacht werden. Schließlich kann der Ablageort im Sammelbehälter 52 entsprechend ermittelt und überwacht werden.

Die Greifeinheit 54-2 des Shuttles 34-2 im Beispiel der Fig. 3 kommt ohne ein derartiges Kamerasystem 60 aus, weil der Quellbehälter 48-1 fachunterteilt ist. Der Quellbehälter 48-1 weist Fachunterteilungen 62 in seinem Inneren auf, um die Produkte 50-1 bis 50-3 in vertikal übereinander gestapelten Produktstapeln bereitzustellen. Die Fachunterteilungen 62 sind vorzugsweise senkrecht orientiert und definieren vorgegebene Räume, die z.B. an die Abmessungen der jeweiligen Produkte 50 angepasst sind. Somit steht eine Entnahmeposition vorab fest. Der Entnahmeort in der XZ-Ebene ist fest vorgegeben. Die Entnahmehöhe ergibt sich z.B. aus den Inventurdaten des entsprechenden Quellbehälters 48-1, die z.B. im Lagerverwaltungsrechner 26 aktuell gespeichert sind. Dies bedeutet, dass die Steuerung 22, und insbesondere der Lagerverwaltungsrechner 26 die Anzahl der im entsprechenden Behälterfach (noch) vorhandenen Produkte 50 verfolgt. Ferner sind aus den Stammdaten die Abmessungen des entsprechenden Produkts 50 abrufbar, um die Entnahmehöhe basierend mit der jeweiligen Anzahl der im Produktstapel verbleibenden Produkte 50 zu bestimmen. Ferner können in den Stammdaten die Fachunterteilungen der Quellbehälter 48 hinterlegt sein, so dass die miteinander kooperierenden Shuttle 34-1 und 34-2 in der Längsrichtung X entsprechend übereinander verfahren werden können und die Greifeinheit 54-2 lediglich in der Querrichtung Z über den entsprechenden Produktstapel bewegt werden muss, um das durch den Kommissionierauftrag und durch den Umsetzauftrag spezifizierte Produkt 50 zu entnehmen ist. Im Beispiel der Fig. 3 handelt es sich z.B. um das Produkt 50-2.

Fig. 4 zeigt eine Abwandlung der Ausführung der Shuttle 34 hinsichtlich einer Relativpositionierung des Sammelbehälters 52. Der Sammelbehälter 52 ist bei den Shuttle 34 der Fig. 4 in einem Endabschnitt des entsprechenden Shuttles 34 angeordnet. Vorzugsweise ist der Sammelbehälter 52 in einem Endabschnitt angeordnet, der gegenüberliegend zu dem Endabschnitt angeordnet ist, wo die jeweilige Greifeinheit 54 positioniert ist.

Der Sammelbehälter 52 der Fig. 4 kann mit einem beweglich gelagerten Boden 64 versehen sein. In der Fig. 4 ist der Boden 64 um eine horizontal orientierte Schwenkachse schwenkbar, die z.B. parallel zur Querrichtung Z verläuft. Eine Öffnungsbewegung 66 des Bodens 64 ist durch einen Pfeil in der Fig. 4A für das obere Shuttle 34i+1 veranschaulicht.

An einem Gassenende 68 (vgl. strichpunktierte Linie in Fig. 4A und 4B) können ein oder mehrere Förderer, insbesondere Stetigförderer 70, des Fördertechniksystem 16 angeordnet sein, um gesammelte Produkte 50 aufzunehmen und zu einer der Kommissionierstationen 14 zu transportieren. Der Stetigförderer 70 kann zum Beispiel durch einen Bandförderer implementiert sein. Der Stetigförderer 70 der Fig. 4 ist tiefer als eine Fahrebene (Regalebene 44i+1 des oberen Shuttles 34i+1 angeordnet, damit die gesammelten Produkte 50 z.B. mittels Schwerkraft aus dem Sammelbehälter 52 (passiv) abgegeben werden können.

Der Stetigförderer 70 der Fig. 4 ist exemplarisch außerhalb des Regallagerblocks 32 angeordnet; er könnte sich aber auch bis in die Regalgasse 42 hinein erstrecken. Die Shuttle 34 der Fig. 4 sind soweit in der Längsrichtung X verfahrbar, dass beim Öffnen des Bodens 64 die gesammelten Produkte 50 auf den entsprechenden Stetigförderer 70 fallen, vgl. Fig. 4B.

Es versteht sich, dass jede der Regalebenen 44 mit einem entsprechenden (externen) Stetigförderer 70 ausgestattet sein kann. Vorzugsweise ist aber nur auf der untersten Regalebene 40 ein Abzugsförderer vorgesehen, der z.B. über einen Turm aus kaskadenförmig angeordneten schrägen Rutschen gebildet ist, um alle Regalebenen 44 vertikal zu verbinden.

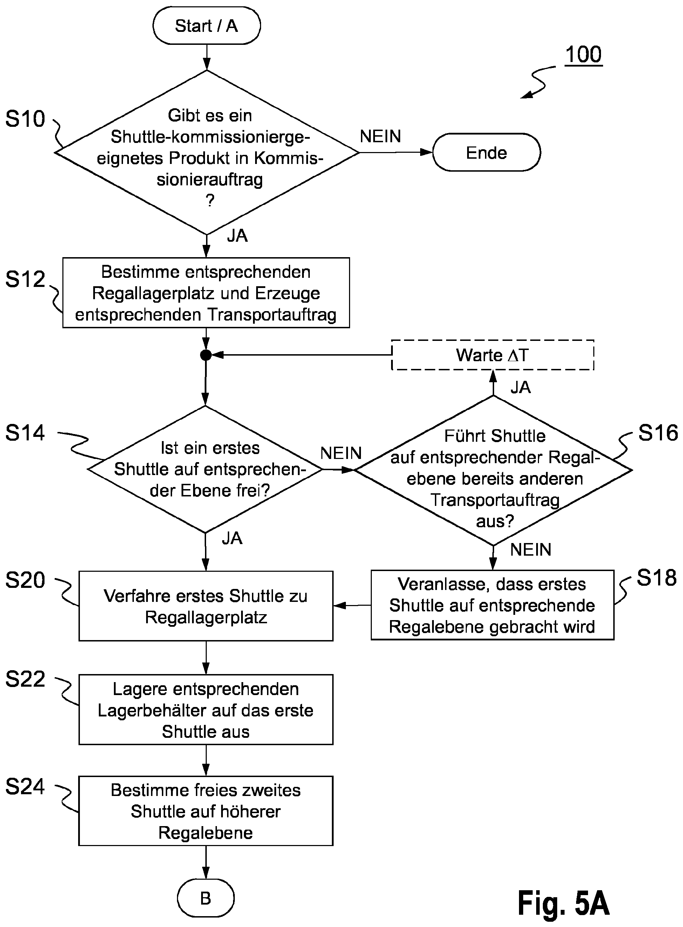

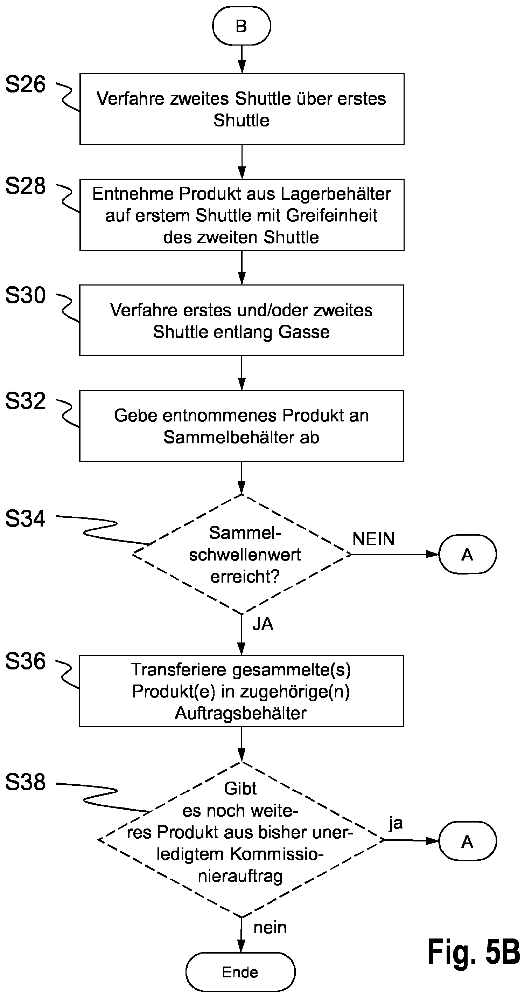

Fig. 5 zeigt ein Flussdiagramm 100 betreffend eine (Vor-)Kommissionierung von Produkten 50 gemäß einem oder mehrerer Kommissionieraufträge durch kooperierende Shuttle 34 innerhalb eines Shuttle-Regallagersystems 30. Die (Vor-)Kommissionierung erfolgt innerhalb der Regalgasse 42, in dem mehrere Shuttle 34, jedoch mindestens zwei der Shuttle 34, miteinander zusammenarbeiten, wie es zuvor bereits in den Fig. 3 und 4 beschrieben wurde. Die nachfolgende Beschreibung des Kommissioniervorgang ist allgemeinerer Natur und somit unabhängig von der strukturellen Ausgestaltung des Systems 30 und insbesondere unabhängig von der Ausgestaltung der Greifeinheit 54.

In einem Schritt S10 fragt die Steuerung 22 ab, ob es ein Shuttle-kommissioniergeeignetes Produkt 50 in einem oder mehreren Kommissionieraufträgen gibt. Wie es nachfolgend noch näher erläutert werden wird, ist unter einem "Shuttle-kommissioniergeeigneten" Produkt 50 ein Produkt 50 zu verstehen, das - unter dem Gesichtspunkt einer Erhöhung der Kommissionierleistung (Anzahl von umgesetzten Produkten pro Zeiteinheit) des Gesamtsystems 30 - durch die Shuttle 34 bevorzugt innerhalb des Regallagerblocks 32 anstatt an der Kommissionierstation 14 (nach dem PzM-Prinzip) kommissioniert wird, die außerhalb des Regallagerblocks 32, also extern, angeordnet ist und die über das Fördertechniksystem 16 mit dem Regallagerblock 32 verbunden ist.

Häufig handelt es sich in diesem Fall um Produkte 50 mit einer geringeren Zugriffshäufigkeit. Die Zugriffshäufigkeit ist eine Kennzahl, die angibt, wie häufig ein Produkt 50 durchschnittlich in einem Kommissionierauftrag vorkommt. Man spricht in diesem Zusammenhang oft auch von einer ABC-Verteilung der Produkte 50, wobei Produkte 50 der Kategorie A eine sehr hohe Zugriffshäufigkeit haben, Produkte der Kategorie B eine mittlere Zugriffshäufigkeit und Produkte der Kategorie C eine (sehr) geringe Zugriffshäufigkeit haben. Oft handelt es sich also bei den Shuttle-kommissioniergeeigneten Produkten 50 um C-Produkte.

Jedoch können auch Produkte 50 einer anderen Zugriffshäufigkeit als "Shuttle-kommissioniergeeignet" klassifiziert werden, wie es nachfolgend noch näher erläutert werden wird. Auch können andere Eigenschaften der Produkte 50, die auch durch den zugeordneten Kommissionierauftrag verursacht werden können, in einer Klassifikation als "Shuttle-kommissioniergeeignet" resultieren, was nachfolgend noch näher erläutert werden wird.

Wenn es keine Shuttle-kommissioniergeeigneten Produkte 50 in den aktuell zu bearbeitenden Kommissionieraufträgen gibt, endet das Verfahren 100. Anderenfalls wird in einem Schritt S12 ein entsprechender Regallagerplatz 46 bestimmt, wo das Shuttle-kommissioniergeeignete Produkt 50 in einem Quellbehälter 48 gelagert ist, indem z.B. eine entsprechende Abfrage an den Lagerverwaltungsrechner 26 gerichtet wird. Die Beurteilung des Schritts S10, ob ein Shuttle-kommissioniergeeignetes Produkt 50 vorhanden ist, kann vom Auftragsabwicklungsrechner 28 der Steuerung 22 durchgeführt werden.

Allgemein können die Quellbehälter 48 durch Kisten, Behälter, Kartons, Tablare und dergleichen implementiert sein.

Ferner kann die Steuerung 22, und insbesondere der Materialflussrechner 24, einen entsprechenden Transportauftrag erzeugen, um den Quellbehälter 48, der das entsprechende Produkt 50 enthält, auf ein Shuttle 34 auf der entsprechenden Regalebene 44 auszulagern, die den zugeordneten Regallagerplatz 46 umfasst. Im Schritt S12 wird also nicht nur der Regallagerplatz 46, sondern auch die entsprechende Regalebene 44 bestimmt.

In einem Schritt S14 kann die Steuerung 22 abfragen, ob ein Shuttle 34 auf der entsprechenden Regalebene 44 frei ist. Das Shuttle 34 auf dieser Regalebene 44 ist frei, wenn dem Shuttle 34 zuvor kein anderer Transportauftrag zugewiesen wurde bzw. das Shuttle 34 aktuell keinen (anderen) Transportauftrag durchführt.

Wenn in der Abfrage des Schritts S14 festgestellt wird, dass kein Shuttle 34 auf der entsprechenden Regalebene 44 frei ist, kann in einem Schritt S16 abgefragt werden, ob das Shuttle 34 auf der entsprechenden Regalebene 44 bereits einen anderen Transportauftrag ausführt. Wenn das Shuttle 34 einen anderen Transportauftrag ausführt, wird eine Zeitdauer ΔT abgewartet, bis das Shuttle 34 auf der entsprechenden Regalebene 44 frei ist. Wenn die Abfrage im Schritt S16 jedoch ergibt, dass auf der entsprechenden Regalebene 44 auch kein anderer Transportauftrag ausgeführt wird, so bedeutet dies, dass auf der entsprechenden Regalebene 44 überhaupt kein Shuttle 34 vorhanden ist. In diesem Fall veranlasst die Steuerung in einem Schritt S18, dass ein freies Shuttle 34 auf die entsprechende Regalebene 44 gebracht wird.

Im Schritt S20 wird das so bestimmte freie (erste) Shuttle 34, z.B. das Shuttle 34-1 in Fig. 3, dann zu dem entsprechenden Regallagerplatz 46 in der Längsrichtung X verfahren, um dort mit seinem Lastaufnahmemittel den Quellbehälter 48 aufzunehmen, der das Shuttle-kommissioniergeeignete Produkt 50 enthält. Im Schritt S22 wird der entsprechende Quellbehälter bzw. Lagerbehälter 48 auf das erste Shuttle 34 ausgelagert.

In einem Schritt S24 der Fig. 5 bestimmt die Steuerung 22 ein weiteres freies (zweites) Shuttle 34, z.B. das Shuttle 34-2 in Fig. 3, auf einer höheren Regalebene 44, um das gewünschte Produkt 50 von dem Quellbehälter 48 aus dem ersten Shuttle 34 in einen Sammelbehälter 52 umzusetzen. Es versteht sich, dass der Schritt S24 alternativ gleichzeitig zum Schritt S12 oder direkt nach dem Schritt S12 und vor dem Schritt S14 durchgeführt werden kann.

Das zweite Shuttle 34, das auch auf einer höher gelegenen Regalebene 44 angeordnet ist, fährt dann im Schritt S26 in der Längsrichtung X (vertikal) über das erste Shuttle 34, vgl. z.B. Fig. 3B. Dies bedeutet, dass das zweite Shuttle 34 in einer Draufsicht das erste Shuttle 34 derart überlappt, dass die Greifeinheit 54 des zweiten Shuttle das Produkt 50 aus dem Quellbehälter 48 auf dem ersten Shuttle 34 entnehmen kann. Das zweite Shuttle 34 ist in einer Regalebene 44 angeordnet, die, vorzugsweise unmittelbar, über der Regalebene des ersten Shuttles 34 angeordnet ist.

In einem weiteren Schritt S28 wird dann das Produkt 50 aus dem Lagerbehälter 48 auf dem ersten Shuttle 34 mit der Greifeinheit 54 des zweiten Shuttle 34 entnommen, indem zum Beispiel der Greifer 58 lediglich vertikal abgesenkt wird, bis er in Kontakt mit dem zu entnehmenden Produkt 50 kommt. Der Greifer 58 kann z.B. durch eine Saugeinrichtung oder einen Mehrfinger-Manipulator gebildet werden.

Während die Greifeinheit 54 des zweiten Shuttles 34-2 das Produkt 50 hält, wird vorzugsweise das zweite Shuttle 34-2 in der Längsrichtung X derart verfahren, dass das gehaltene Produkt 50 in den Sammelbehälter 52 abgelegt oder abgeworfen werden kann. Üblicherweise steht der Sammelbehälter 52 auf dem ersten Shuttle 34-1 in der darunterliegenden Regalebene 44. Alternativ kann das zweite Shuttle 34-2 zum Beispiel an das Gassenende 68 fahren, um das aufgenommene Produkt 50 an einen Stetigförderer 70 abzugeben, der in diesem Fall die Funktion eines Sammelbehälters 52 haben kann, siehe Bezugszeichen 52'i+1 in Fig. 4A, der nicht wirklich physisch vorhanden sein muss. Auf diese Weise können mehrere (verschiedene) Produkte 50, insbesondere innerhalb eines vordefinierten Bereichs (virtueller Sammelbehälter 52'), auf dem Stetigförderer 70 gesammelt werden, bevor der Stetigförderer 70 betätigt wird, um die gesammelten Produkte 50 zur Kommissionierstation 14 zu transportieren. Die Abgabe des entnommenen Produkts 50 an den Sammelbehälter 52 bzw. 52' erfolgt im Schritt S32 der Fig. 5.

Optional kann sich in einem Schritt S34 eine Abfrage an den Abgabeschritt S32 anschließen. Im Schritt S34 kann abgefragt werden, ob ein Sammelschwellenwert erreicht ist. Der Sammelschwellenwert kann z.B. durch eine Anzahl von gesammelten Produkten 50, eine zeitliche Sammeldauer, eine Speicherkapazität des Sammelbehälters 52 und dergleichen definiert sein. Der Sammelschwellenwert wird durch die Steuerung 22 vorgegeben.

Wenn der Sammelschwellenwert im Schritt S34 noch nicht erreicht ist, kehrt das Verfahren 100 zum Schritt S10 zurück. Anderenfalls schreitet das Verfahren zu einem Schritt S36 fort.

Im Schritt S36 wird das an den Sammelbehälter 52 abgegebene Produkt 50 bzw. die Produkte 50 zu dem bzw. den zugehörigen Ziel- bzw. Auftragsbehältern transferiert. Dies bedeutet, dass die gesammelten Produkte 50 zur Kommissionierstation 14 transportiert werden, um dort in den Zielbehälter (bei einer einstufigen Kommissionierung) umgesetzt oder in die Zielbehälter (bei einer zweistufigen Kommissionierung) sortiert zu werden.

Abschließend kann (optional) in einem Schritt S38 abgefragt werden, ob es noch weitere Produkte 50 aus bisher unerledigten Kommissionieraufträgen gibt. Wenn es weitere Produkte 50 gibt, kehrt das Verfahren 100 zum Schritt S10 zurück - anderenfalls endet das Verfahren 100. Es versteht sich, dass die entsprechenden Transport- und Umsetzschritte alternativ auch alle bereits vorab geplant werden können.

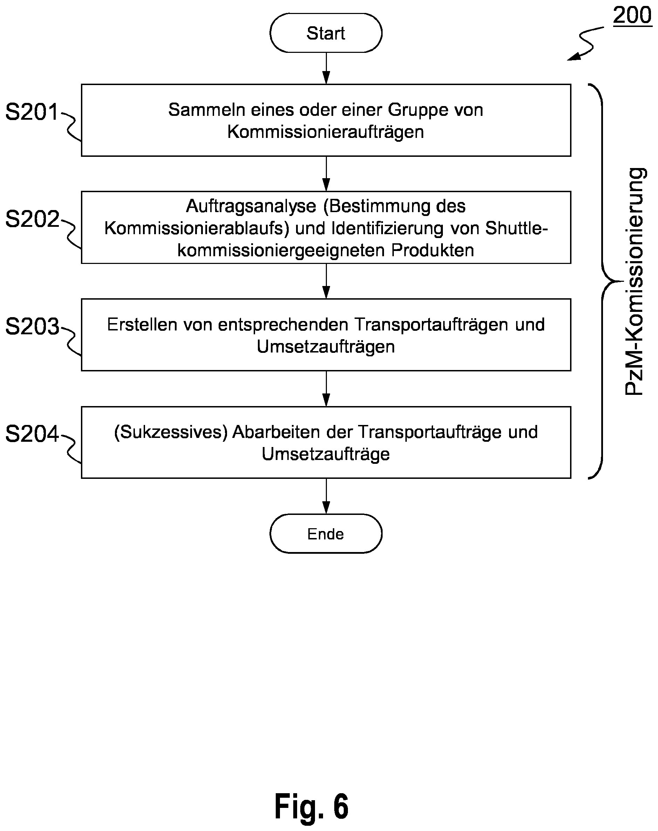

Das Verfahren 100 der Fig. 5 ist vorzugsweise ein Teil eines allgemeineren Kommissionierverfahrens 200, dessen Flussdiagramm in der Fig. 6 veranschaulicht ist.

Das allgemeinere Kommissionierverfahren 200 umfasst mehrere Verfahrensschritte. In einem ersten Verfahrensschritt S201 werden ein oder mehrere Kommissionieraufträge gesammelt. Wenn mehrere Kommissionieraufträge gesammelt werden, wird nachfolgend auch von einer Gruppe von Kommissionieraufträgen gesprochen.

In einem Schritt S202 werden die gesammelten Aufträge analysiert. Die Auftragsanalyse wird von der Steuerung 22, und insbesondere vom Auftragsabwicklungsrechner 28, durchgeführt. Bei der Auftragsanalyse wird insbesondere ein Kommissionierablauf bestimmt. Es wird z.B. bestimmt, ob im Lager- und Kommissioniersystem 10 der Fig. 1 einstufig oder zweistufig kommissioniert wird. Ein Mischbetrieb aus einer einstufigen Kommissionierung und einer zweistufigen Kommissionierung ist ebenfalls möglich. Da das Lager- und Kommissioniersystem 10 der Fig. 1 nach dem PzM-Prinzip arbeitet, kann bei der Auftragsanalyse zusätzlich bestimmt werden, ob parallel kommissioniert wird. Beim parallelen Kommissionieren werden, vorzugsweise produkttypenrein bestückte, Quellbehälter 48 zur Kommissionierstation 14 transportiert, um mehrere Zielbehälter, die auf entsprechenden Pufferplätzen in der Kommissionierstation 14 positioniert sind, gleichzeitig zu befüllen. In diesem Fall erfolgt die Auslagerung der Quellbehälter 48 artikelorientiert und die Beladung der Zielbehälter auftragsorientiert.

Die Auftragsanalyse stellt ein Optimierungsverfahren dar. In der Auftragsanalyse wird zum Beispiel eine Reihenfolge festgelegt, innerhalb der die gesammelten Kommissionieraufträge abgearbeitet werden. Ist ein Produkttyp an mehreren unterschiedlichen Regallagerplätzen 46 bevorratet, werden die entsprechenden Regallagerplätze 46 bestimmt und ein z.B. wegoptimierter Kandidat wird daraus ausgewählt, der den kürzesten Transportweg vom Regallagerplatz 46 zur Kommissionierstation 14 aufweist. Auf ähnliche Weise werden Shuttle 34 im Shuttle-Regallagersystem 30 und weitere Fördertechnikelemente des Fördertechniksystems 16 außerhalb des Regallagerblocks 32 unter Optimierungsaspekten (Zeit, Weg, Produktverteilung innerhalb des Sortiments, etc.) bestimmt und ausgewählt.

Die Auftragsanalyse kann auch eine Klassifizierung der Produkte 50 nach Zugriffshäufigkeiten aufweisen. Insbesondere kann die Auftragsanalyse die oben erwähnten Shuttle-kommissioniergeeigneten Produkte 50 identifizieren, die in der Abfrage des Schritts S10 des Verfahrens 100 in der Fig. 5 verwendet werden. Abhängig von den zuvor bestimmten und festgelegten Parametern, wie zum Beispiel einer Abarbeitungsreihenfolge der gesammelten Kommissionieraufträge, einer Berücksichtigung von vorab festgelegten Zugriffshäufigkeiten und dergleichen, werden bestimmte Produkttypen aus den gesammelten Kommissionieraufträgen als Shuttle-kommissioniergeeignete Produkte 50 klassifiziert. Zur Vereinfachung der nachfolgenden Beschreibung werden exemplarisch Produkte 50 mit einer geringen Zugriffshäufigkeit (C-Produkte) als Shuttle-kommissioniergeeignet identifiziert. Die Produkte 50 mit einer geringen Zugriffshäufigkeit "belasten" den Materialfluss, weil die entsprechenden Quellbehälter 48 mitunter sehr lange Transportwege vom Regallagerblock 32 zur Kommissionierstation 14 zurücklegen müssen, um am Ort der Kommissionierstation 14 in einer geringen Anzahl entnommen zu werden. Während der entsprechende Quellbehälter 48 durch das Fördertechniksystem 16 zur Kommissionierstation 14 bewegt wird, kann kein anderer Quellbehälter 48 zur Kommissionierstation 14 bewegt werden, der ein Produkt 50 mit einer höheren Zugriffshäufigkeit aufweist. Deshalb ist es von Vorteil, dieses C-Produkt 50 direkt innerhalb des Regallagerblocks 32 durch die Shuttle 34 selbst zu kommissionieren, wie es oben exemplarisch in den Fig. 3 und 4 bereits erläutert wurde. In diesem Fall verlassen die entsprechenden Quellbehälter 48 den Regallagerblock 32 nicht.

Die C-Produkte 50 werden vorzugsweise nur in dem Fall durch die Shuttle 34 kommissioniert, wenn die entsprechenden Shuttle 34 nicht mit anderen Transportaufträgen (für z.B. A- und B-Produkte 50) belegt sind. Dies bedeutet mit anderen Worten, dass die Shuttle 34 zum Kommissionieren der C-Produkte 50 innerhalb der Regalgasse 42 eingesetzt werden, die anderenfalls im Warte- bzw. Ruhezustand wären. Dies bedeutet insbesondere, dass im Wartezuzstand befindliche Shuttle 34 die zu kommissionierenden Produkte 50 auch unabhängig von deren Zugriffshäufigkeit sofort bzw. frühzeitiger in der Gasse 42 kommissionieren können. Zwei Shuttle 34 ohne aktuellen Transportauftrag (zur Versorgung der externen Kommissionierstation 14) können z.B. auch eingesetzt werden, um ein A- oder B-Produkt 50, das in einem der Kommissionieraufträge enthalten ist, vorzeitig innerhalb der Gasse 42 zu kommissionieren.

Auch auf diese Weise kann die (Quellbehälter-)Verkehrsdichte im Fördertechniksystem 16, das außerhalb des Regallagers 32 angeordnet ist, verringert werden. Somit ist die Kapazität des Fördertechniksystems 16 für einen Transport von Produkten 50 mit einer höheren Zugriffshäufigkeit erhöht. Dies wiederum resultiert in einer erhöhten Gesamtkommissionierleistung (erledigte Kommissionieraufträge/Zeiteinheit).

Es versteht sich, dass die Identifizierung eines "Shuttle-kommissioniergeeigneten" Produkts 50 von vielen der zuvor diskutierten Parameter gleichzeitig abhängen kann und sich von Kommissionierauftrag zu Kommissionierauftrag unterscheiden kann.

Das in der Fig. 5 beschriebene Kommissionierverfahren ermöglicht einen Kommissioniermischbetrieb. Zum Beispiel werden die A- und B-Produkte weiterhin nach dem PzM-Prinzip gemäß der Fig. 6 in der Kommissionierstation 14 abgearbeitet. Innerhalb des Regallagerblocks 32 erfolgt die Kommissionierung automatisiert durch eine Kooperation mehrere der Shuttle 34 gemäß der Fig. 5, insbesondere nach dem MzP-Prinzip, wenn die im Sammelbehälter 52 gesammelten Produkte 50 nicht mehr mit weiteren Produkten 50 in der Kommissionierstation 14 zusammengeführt werden müssen. Anderenfalls erfolgt im Regallagerblock 32 eine Vorkommissionierung nach dem MzP-Prinzip und die finale Kommissionierung erfolgt dann nach dem PzM-Prinzip in der Kommissionierstation 14.

Zurückkehrend zur Fig. 6 werden nach der Auftragsanalyse gemäß dem Schritt S202 in einem Schritt S203 entsprechende Transportaufträge, insbesondere durch den Materialflussrechner 24, und Umsetzaufträge, insbesondere durch den Auftragsabwicklungsrechner 28, erstellt. Die Transportaufträge und Umsetzaufträge basieren auf einem oder mehreren Kommissionieraufträgen.

Anschließend werden in einem Schritt S204 (sukzessive) die Transportaufträge und Umsetzaufträge aus dem Schritt S203 abgearbeitet, insbesondere gemäß dem in Fig. 5 veranschaulichten Verfahren. Die Abarbeitung des Schritts S204 kann - im Mischbetrieb - die Schritte S10 bis S38 des Verfahrens 100 der Fig. 5 umfassen.

Die Schritte S203 und S204 sind teilweise deckungsgleich mit spezielleren Schritten aus Fig. 5.

Das Verfahren 200 der Fig. 6 endet, wenn alle Kommissionieraufträge erledigt sind. In diesem Fall wurden alle Produkte 50 gemäß den durch die Kommissionieraufträge vorgegebenen Typen und Anzahlen aus den Quellbehältern 48 entnommen und in die Zielbehälter abgegeben, d.h. umgesetzt

Das Verfahren 200 veranschaulicht somit exemplarisch eine Kommissionierung nach dem PzM-Prinzip im Lager- und Kommissioniersystem 10 der Fig. 1, wobei das spezielle Shuttle-Kommissionierverfahren 100 gemäß der Fig. 5 berücksichtigt werden kann.

### BEZUGSZEICHENLISTE:

- 10: Lager- und Kommissioniersystem
- 12: Lager
- 14: Kommissionierstation
- 16: Fördertechniksystem
- 18: Wareneingang
- 20: Warenausgang
- 22: Steuerung
- 24: Materialflussrechner
- 26: Lagerverwaltungsrechner
- 28: Auftragsabwicklungsrechner
- 30: Shuttle-Regallagersystem
- 32: Regallagerblock
- 34: Shuttle
- 36: Vertikalförderer
- 38: Steuerungsmodul
- 40: Regalreihe
- 42: Regalgasse
- 44: Regalebene
- 46: Regallagerplatz
- 48: Quellbehälter
- 50: Produkt
- 51: Schiene
- 52: Sammelbehälter
- 54: Greifeinheit
- 56: Antrieb
- 58: Greifer/Manipulator
- 60: Kamerasystem
- 62: Fachunterteilung
- 64: Boden von 52
- 66: Öffnungsbewegung
- 68: Ende von 42
- 70: Stetigförderer
- 100: Kommissionierverfahren (speziell)
- 200: Kommissionierverfahren (allgemein)

## Patentansprüche

1. Verfahren (100) zum Kommissionieren eines Produkts (50) gemäß einem Kommissionierauftrag, der vorzugsweise zu einer Gruppe von zuvor gesammelten Kommissionieraufträgen gehört, durch miteinander kooperierende Shuttle (34) in einem Shuttle-Regallagersystem (30), das einen Regallagerblock (32) und eine Vielzahl von Shuttle (34) umfasst, die in einer zwischen zwei Regalreihen (40) definierten Regalgasse (42) auf unterschiedlichen Regalebenen (44) zwangsgeführt verfahrbar sind, wobei das Verfahren (100) die folgenden Schritte aufweist:
Verfahren (S20) eines ersten Shuttle (34-1) der kooperierenden Shuttle (34) in einer Längsrichtung (X) des Regallagerblocks (32) entlang der Regalgasse (43) zu einem Regallagerplatz (46) in einer ersten Regalebene (44-1) und anschließendes Auslagern (S22) eines Quellbehälters (48-1), der das durch den Komissionierauftrag festgelegten Produkt (50-2) enthält, aus dem Regallagerplatz (46) auf das erste Shuttle (34-1);
Verfahren (S26) eines zweiten Shuttle (34-2) der kooperierenden Shuttle (34) in und entlang der Regalgasse (43) auf Höhe einer höher gelegenen zweiten Regalebene (44-2) über das zuvor tiefer positionierte erste Shuttle (34-1), so dass eine Greifeinheit (54-2), die am zweiten Shuttle (34-2) montiert ist, das Produkt (50) aus dem Quellbehälter (48-1) entnehmen kann, der währenddessen auf dem ersten Shuttle (34-1) positioniert ist; und
Umsetzen des Produkts (50-2) aus dem ausgelagerten Quellbehälter (48-1) in einen Sammelbehälter (52) durch:
Entnehmen (S28) des Produkts (50-2) aus dem auf dem ersten Shuttle (34-1) positionierten, ausgelagerten Quellbehälter (48-1) mit der Greifeinheit (54-2) des zweiten Shuttle (34-2); und
Abgeben (S32) des entnommenen Produkts (50-2) an den Sammelbehälter (52-1, 52'),
der auf einem der Shuttle (34-0, 34-1), das vorzugsweise das erste Shuttle (34-1) ist, positioniert ist, das tiefer als das zweite Shuttle (34-2) innerhalb der Regalgasse positioniert ist, oder
der tiefer liegend als das zweite Shuttle (34-2) an einem Ende (68) der Regalgasse (42) positioniert ist.

2. Verfahren (100) nach Anspruch 1, wobei die Greifeinheit (54) zweiachsig ausgebildet ist, um das Produkt (50) ausschließlich mit Bewegungen in einer Höhenrichtung (Y) und einer Querrichtung (Z) des Regallagerblocks (32) zu entnehmen und abzugeben, und wobei ein Bewegungsanteil des Umsetzschritts (S28, S32) entlang der Längsrichtung (X) durch ein Verfahren (S30) von mindestens einem der ersten und zweiten Shuttle (34-1, 34-2) veranlasst wird.

3. Verfahren (100) nach Anspruch 1 oder 2, das ferner aufweist:
Analysieren (S202; S10) von zumindest dem einen Kommissionierauftrag nach Shuttle-kommissioniergeeigneten Produkten (50).

4. Verfahren nach Anspruch 3, wobei der Schritt des Analysierens (S202; S10) basierend auf mindestens einem der nachfolgenden Parameter erfolgt:
eine jeweilige Zugriffshäufigkeit der in den Kommissionieraufträgen enthaltenen Produkte (50);
sich überschneidende Stillstandsphasen der ersten und zweiten Shuttle (34-1, 34-2); und
eine Anzahl der Stufen des praktizierten Kommissionierprinzips.

5. Verfahren (100) nach Anspruch 3 oder 4, wobei
das Shuttle-Regallagersystem (30) eine Kommissionierstation (14) außerhalb des Regallagerblocks (32) mit Quellbehältern (48) für eine Kommissionierung nach dem PzM-Prinzip versorgt, und
die Shuttle-kommissioniergeeigneten Produkte (50), die insbesondere Produkte mit einer niedrigen Zugriffshäufigkeit sind, gleichzeitig innerhalb der Regalgasse (42) durch die kooperierenden Shuttle (34-0, 34-1, 34-2) vorkommissioniert oder final kommissioniert werden.

6. Verfahren (100) nach Anspruch 5, wobei die Kommissionierung der Shuttle-kommissioniergeeigneten Produkte (50) derart erfolgt, dass die Versorgung der Kommissionierstation (14) mit aus dem Regallagerblock (32) ausgelagerten Quellbehältern (48) störungsfrei erfolgt.

7. Verfahren (100) nach einem der Ansprüche 1 bis 6, wobei der Schritt des Abgebens (S32) ein vertikales Fallenlassen des entnommenen Produkts (50-2) ist.

8. Verfahren (100) nach einem der Ansprüche 1 bis 7, wobei das oder die an den Sammelbehälter (52, 52') abgegebenen Produkte (50), insbesondere im Fall einer zweistufigen Kommissionierung, zu einer Kommissionierstation (14) außerhalb des Regallagerblocks (32) transportiert werden.

9. Verfahren (100) nach einem der Ansprüche 1 bis 8, wobei der Sammelbehälter (52), der auf dem einen der Shuttle (34-0, 34-1) positioniert ist, (innerhalb des Regallagerblocks 32) entweder geleert oder ausgetauscht wird, nachdem alle durch den oder die Kommissionieraufträge vorgegebenen Produkte (50) an den Sammelbehälter (52, 52') abgegeben wurden.

10. Shuttle-Regallagersystem (30), das aufweist:
einen Regallagerblock (32) mit einer Regalgasse (42), die zwischen zwei Regalreihen (40) angeordnet ist; und
eine Vielzahl von miteinander kooperierenden Shuttle (34) mit zumindest einem ersten Shuttle (34-1) und einem zweiten Shuttle (34-2), die auf unterschiedlichen Regalebenen (44) vorgesehen sind und die in der Regalgasse (42) betrieben werden;
wobei das erstes Shuttle (34-1) auf Höhe einer ersten (44-1) der Regalebenen betrieben wird;
wobei das zweite Shuttle (34-2) auf Höhe einer zweiten (44-2) der Regalebenen betrieben wird, die höher, und insbesondere unmittelbar über, der ersten Regalebene (44-1) angeordnet ist; und
wobei zumindest das zweite Shuttle (34-2), und vorzugsweise alle Shuttle (34) jeweils, mit einer zweiachsigen Greifeinheit (54) versehen ist, die eingerichtet ist, ein Produkt (50) aus einem Quellbehälter (48), der vorübergehend auf dem ersten Shuttle (34-1) positioniert ist, zu entnehmen und an einen Sammelbehälter (52), der tiefer als das zweite Shuttle (34-2) positioniert ist, abzugeben, indem die Greifeinheit (54) das Produkt (50) lediglich vertikal anhebt, und ggf. auch vertikal absenkt, und das entnommene Produkt (50) horizontal quer zu einer Längsrichtung (X) der Regalgasse (42) versetzt.

11. Shuttle-Regallagersystem (30) nach Anspruch 10, wobei zumindest einige, und vorzugsweise alle, der Quellbehälter (48) eine Fachunterteilung (62) aufweisen, so dass Produkte (50) in vertikal ausgerichteten Produktstapeln an fest vorgegeben Positionen innerhalb der entsprechenden Quellbehälter (48) lagerbar sind.

12. Shuttle-Regallagersystem (30) nach Anspruch 10 oder 11, wobei jede der Greifeinheiten (54) mit einem Vision-System versehen ist.

13. Shuttle-Regallagersystem (30) nach einem der Ansprüche 10 bis 12, wobei jede der Greifeinheiten (54) in einem in der Längsrichtung (X) gelegenen Endabschnitt des entsprechenden Shuttle (34) derart positioniert und angebracht ist, dass eine jeweilige Shuttlehöhe ohne einen geladenen Quellbehälter (48) geringer als mit einem geladenem Quellbehälter (48) ist.

14. Shuttle-Regallagersystem (30) nach einem der Ansprüche 10 bis 13, wobei das Shuttle-Regallagersystem über eine Steuerung verfügt, die zum Durchführen eines Verfahrens (100) nach einem der Ansprüche 1 bis 9 eingerichtet ist.

15. Lager- und Kommissioniersystem (10) mit einer Steuerung (22) und mit einem Shuttle-Regallagersystem (30) nach einem der Ansprüche 10 bis 14.

## Claims

1. A method (100) for picking products (50), in accordance with a picking order which preferably belongs to a group of picking orders collected before, by shuttles (34) cooperating with each other in a shuttle-rack storage system (30), which includes a rack-storage block (32) and a plurality of shuttles (34) movable in a force-guided manner on different rack levels (44) in a rack aisle (42) defined between two rack rows (40), wherein the method (100) comprises the following steps:
moving (S20) a first shuttle (34-1) of the cooperating shuttles (34) in a longitudinal direction (X) of the rack-storage block (32) along the rack aisle (43) to a rack-storage location (46) in a first rack level (44-1) and subsequently retrieving (S22) a source container (48-1) containing the product (50-2) specified by the picking order from the rack-storage location (46) onto the first shuttle (34-1);
moving (S26) a second shuttle (34-2) of the cooperating shuttles (34) in and along the rack aisle (43) at height of a higher second rack level (44-2) over the previously lower positioned first shuttle (34-1) so that a gripping unit (54-2), which is mounted on the second shuttle (34-2), can pick the product (50) from the source container (48-1), which is meanwhile positioned on the first shuttle (34-1); and
transferring the product (50-2) from the retrieved source container (48-1) into a collecting container (52) by:
removing (S28) the product (50-2) from the retrieved source container (48-1), which is positioned on the first shuttle (34-1), by means of the gripping unit (54-2) of the second shuttle (34-2); and
delivering (S32) the removed product (50-2) to the collecting container (52-1, 52')
being positioned on one of the shuttles (34-0, 34-1), which preferably is the first shuttle (34-1), positioned lower than the second shuttle (34-2) within the rack aisle, or
being positioned, lower than the second shuttle (34-2), at an end (68) of the rack aisle (42).

2. The method (100) of claim 1, wherein the gripping unit (54) is formed biaxial for removing and delivering the product (50) exclusively due to movements in height direction (Y) and transverse direction (Z) of the rack-storage block (32), and wherein a movement proportion of the transferring step (S28, S32) along the longitudinal direction (X) is caused by moving (S30) of at least one of the first and second shuttles (34-1, 34-2).

3. The method (100) of claim 1 or 2, further comprising:
analyzing (S202; S10) the at least one picking order for products (50) suitable for shuttle-picking.

4. The method of claim 3, wherein the step of analyzing (S202; S10) is performed based on at least one of the following parameters:
a respective access frequency of the products (50) contained in the picking orders;
overlapping downtime phases of the first and second shuttles (34-1, 34-2); and
a number of stages of the picking principle practiced.

5. The method (100) of claim 3 or 4, wherein
the shuttle-rack storage system (30) supplies a picking station (14) outside the rack-storage block (32) with source containers (48) for picking in accordance with the PtM-principle, and
the products (50) suitable for shuttle-picking, which are in particular products having a low access frequency, are pre-picked, or finally picked, by the cooperating shuttles (34-0, 34-1, 34-2) within the rack aisle (42) at the same time.

6. The method (100) of claim 5, wherein the picking of the products (50) suitable for shuttle-picking is performed such that the supply of the picking station (14) with source containers (48), which are retrieved from the rack-storage block (32), occurs trouble-free.

7. The method (100) of any of claims 1 to 6, wherein the step of delivering (S32) is a vertical dropping of the removed product (50-2).

8. The method (100) of any of claims 1 to 7, wherein the product(s) (50) delivered to the collecting container (52, 52'), in particular in case of a two-stage picking, is/are transported to a picking station (14) outside the rack-storage block (32).

9. The method (100) of any of claims 1 to 8, wherein the collecting container (52), which is positioned on one of the shuttles (34-0, 34-1), is either emptied or exchanged (within the rack-storage block 32) after each of the products (50) determined by the picking order(s) have been delivered to the collecting container (52, 52').

10. A shuttle-rack storage system (30), comprising:
a rack-storage block (32) including a rack aisle (42) arranged between two rack rows (40); and
a plurality of shuttles (34), which cooperate with each other, including at least a first shuttle (34-1) and a second shuttle (34-2), which are provided on different rack levels (44) and are operated in the rack aisle (42);
wherein the first shuttle (34-1) is operated at height of a first one (44-1) of the rack levels;
wherein the second shuttle (34-2) is operated at height of a second one (44-2) of the rack levels being arranged higher, and in particular directly over, the first rack level (44-1); and
wherein at least the second shuttle (34-2), and preferably each of the shuttles (34), is provided with a biaxial gripping unit (54) configured to remove a product (50) from a source container (48), which is positioned temporarily on the first shuttle (34-1), and deliver it to a collecting container (52) being positioned lower than the second shuttle (34-2) by lifting the product (50) only vertically, by the gripping unit (54), and lowering it also vertically, if necessary, and displacing the removed product (50) horizontally transverse to a longitudinal direction (X) of the rack aisle (42).

11. The shuttle-rack storage system (30) of claim 10, wherein at least some, and preferably all, of the source containers (48) comprise a compartment partition (62) so that products (50) in vertically oriented product stacks are storable at fixedly determined positions within the corresponding source containers (48).

12. The shuttle-rack storage system (30) of claim 10 or 11, wherein each of the gripping units (54) is provided with a vision system.

13. The shuttle-rack storage system (30) of any of claims 10 to 12, wherein each of the gripping units (54) is positioned and attached to an end portion, which is located in the longitudinal direction (X), of the corresponding shuttle (34) such that a respective shuttle height without any loaded source container (48) is less than with a loaded source container (48).

14. The shuttle-rack storage system (30) of any of claims 10 to 13, wherein the shuttle-rack storage system is provided with a control configured to carry out a method (100) of any of the claims 1 to 9.

15. A storage and picking system (10) including a controlling device (22) and a shuttle-rack storage system (30) of any of claims 10 to 14.

## Revendications

1. Procédé (100) pour la préparation de commandes d'un produit (50) selon un ordre de préparation de commandes appartenant de préférence à un groupe d'ordres de préparation de commandes collectés au préalable, par des navettes (34) coopérant les unes avec les autres dans un système de stockage à rayonnages à navettes (30) comprenant un bloc de stockage à rayonnages (32) et une pluralité de navettes (34) pouvant être déplacées de manière forcée sur différents plans de rayonnage (44) dans une allée de rayonnage (42) définie entre deux rangées de rayonnage (40), dans lequel le procédé (100) présente les étapes suivantes :
déplacement (S20) d'une première navette (34-1) parmi les navettes (34) coopérantes dans une direction longitudinale (X) du bloc de stockage à rayonnages (32) le long de l'allée de rayonnage (43) vers un emplacement de stockage à rayonnage (46) dans un premier plan de rayonnage (44-1), puis déstockage (S22) d'un récipient source (48-1), contenant le produit (50-2) établi par l'ordre de préparation de commandes, hors de l'emplacement de stockage à rayonnage (46) sur la première navette (34-1) ;
déplacement (S26) d'une seconde navette (34-2) parmi les navettes (34) coopérantes dans l'allée de rayonnage (43) et le long de celle-ci à hauteur d'un second plan de rayonnage (44-2) situé plus haut au-dessus de la première navette (34-1) précédemment positionnée plus bas, de sorte qu'une unité de préhension (54-2) montée sur la seconde navette (34-2) peut prélever le produit (50) hors du récipient source (48-1) positionné pendant ce temps sur la première navette (34-1) ; et
transfert du produit (50-2) depuis le récipient source (48-1) déstocké vers un récipient collecteur (52) par :
le prélèvement (S28) par l'unité de préhension (54-2) de la seconde navette (34-2) du produit (50-2) hors du récipient source (48-1) déstocké et positionné sur la première navette (34-1) ; et
la distribution (S32) du produit (50-2) prélevé au récipient collecteur (52-1, 52')
positionné sur l'une des navettes (34-0, 34-1), de préférence sur la première navette (34-1), positionnée plus bas que la seconde navette (34-2) à l'intérieur de l'allée de rayonnage, ou
positionné plus bas que la seconde navette (34-2) à une extrémité (68) de l'allée de rayonnage (42).

2. Procédé (100) selon la revendication 1, dans lequel l'unité de préhension (54) est réalisée biaxialement afin de prélever et de distribuer le produit (50) exclusivement avec des mouvements dans une direction de hauteur (Y) et une direction transversale (Z) du bloc de stockage à rayonnages (32), et dans lequel une partie de mouvement de l'étape de transfert (S28, S32) le long de la direction longitudinale (X) est provoquée par un déplacement (S30) d'au moins l'une parmi la première et la seconde navette (34-1, 34-2).

3. Procédé (100) selon la revendication 1 ou 2, présentant en outre :
l'analyse (S202 ; S10) de produits (50) adaptés à la préparation de commandes par navettes de l'au moins un ordre de préparation de commandes.

4. Procédé selon la revendication 3, dans lequel l'étape d'analyse (S202 ; S10) est effectuée sur la base d'au moins l'un des paramètres suivants :
une fréquence d'accès respective des produits (50) contenus dans les ordres de préparation de commandes ;
des moments d'arrêt en chevauchement de la première et de la seconde navette (34-1, 34-2) ; et
un certain nombre de phases du principe de préparation de commandes pratiqué.

5. Procédé (100) selon la revendication 3 ou 4, dans lequel
le système de stockage à rayonnages à navettes (30) alimente un poste de préparation de commandes (14) à l'extérieur du bloc de stockage à rayonnages (32) avec des récipients sources (48) pour une préparation de commandes selon le principe produit-à-machine (PzM), et
les produits (50) adaptés à la préparation de commandes par navettes, lesquels sont en particulier des produits ayant une faible fréquence d'accès, sont simultanément prépréparés ou préparés de façon finale à l'intérieur de l'allée de rayonnage (42) par les navettes (34-0, 34-1, 34-2) coopérantes.

6. Procédé (100) selon la revendication 5, dans lequel la préparation de commandes des produits (50) adaptés à la préparation de commandes par navettes est effectuée de telle sorte que l'alimentation du poste de préparation de commandes (14) avec des récipients sources (48) déstockés hors du bloc de stockage à rayonnages (32) est effectuée sans perturbation.

7. Procédé (100) selon l'une des revendications 1 à 6, dans lequel l'étape de distribution (S32) est une chute verticale du produit (50-2) prélevé.

8. Procédé (100) selon l'une des revendications 1 à 7, dans lequel le ou les produits (50) distribués dans le récipient collecteur (52, 52') sont transportés, en particulier dans le cas d'une préparation de commandes en deux phases, vers un poste de préparation de commandes (14) à l'extérieur du bloc de stockage à rayonnages (32).

9. Procédé (100) selon l'une des revendications 1 à 8, dans lequel le récipient collecteur (52) positionné sur l'une des navettes (34-0, 34-1) est soit vidé, soit remplacé (à l'intérieur du bloc de stockage à rayonnages 32), après que tous les produits (50) prédéterminés par le ou les ordres de préparation de commandes ont été distribués dans le récipient collecteur (52, 52').

10. Système de stockage à rayonnages à navettes (30), présentant :
un bloc de stockage à rayonnages (32) comportant une allée de rayonnage (42) disposée entre deux rangées de rayonnage (40) ; et
une pluralité de navettes (34) coopérant les unes avec les autres, comportant au moins une première navette (34-1) et une seconde navette (34-2), lesquelles sont prévues sur différents plans de rayonnage (44) et fonctionnent dans l'allée de rayonnage (42) ;
dans lequel la première navette (34-1) fonctionne à hauteur d'un premier plan (44-1) parmi les plans de rayonnage ;
dans lequel la seconde navette (34-2) fonctionne à hauteur d'un second plan (44-2) parmi les plans de rayonnage qui est disposé plus haut que le premier plan de rayonnage (44-1), et en particulier immédiatement au-dessus de celui-ci ; et
dans lequel au moins la seconde navette (34-2), et de préférence toutes les navettes (34) respectivement, sont pourvues d'une unité de préhension (54) biaxiale conçue pour prélever un produit (50) hors d'un récipient source (48) positionné temporairement sur la première navette (34-1) et pour le distribuer à un récipient collecteur (52) positionné plus bas que la seconde navette (34-2) par le fait que l'unité de préhension (54) soulève le produit (50) uniquement verticalement et, éventuellement, le fait descendre verticalement également, et déplace le produit (50) prélevé horizontalement et transversalement par rapport à une direction longitudinale (X) de l'allée de rayonnage (42).

11. Système de stockage à rayonnages à navettes (30) selon la revendication 10, dans lequel au moins certains des récipients sources (48), et de préférence tous, présentent une subdivision en compartiments (62) de sorte que des produits (50) peuvent être stockés en piles de produits orientées verticalement au niveau de positions fixes prédéterminées à l'intérieur des récipients sources (48) correspondants.

12. Système de stockage à rayonnages à navettes (30) selon la revendication 10 ou 11, dans lequel chacune des unités de préhension (54) est pourvue d'un système de visionnage.

13. Système de stockage à rayonnages à navettes (30) selon l'une des revendications 10 à 12, dans lequel chacune des unités de préhension (54) est positionnée et placée dans une section d'extrémité, située dans la direction longitudinale (X), de la navette (34) correspondante, de telle sorte qu'une hauteur de navette respective sans récipient source (48) chargé est inférieure à celle d'une navette comportant un récipient source (48) chargé.

14. Système de stockage à rayonnages à navettes (30) selon l'une des revendications 10 à 13, dans lequel le système de stockage à rayonnages à navettes dispose d'un dispositif de commande configuré pour mettre en œuvre un procédé (100) selon l'une des revendications 1 à 9.

15. Système de stockage et de préparation de commandes (10) comportant un dispositif de commande (22) et comportant un système de stockage à rayonnages à navettes (30) selon l'une des revendications 10 à 14.
